# EUROPEAN PATENT APPLICATION

(11) **EP 4 694 556 A1**
(43) Date of publication of application: **11.02.2026**
(21) Application number: 24732382.7
(22) Date of filing: 02.04.2024
(51) Int. Cl.: H04W 76/18, H04W 76/34, H04W 72/04, H04W 72/25, H04W 72/542, H04W 72/56, H04W 76/28, H04W 24/08, H04L 5/00, H04W 4/40

(54) **METHOD AND APPARATUS FOR SELECTING CARRIER FOR RLF OPERATION OF MULTI-CARRIER SUPPORT TERMINAL**

(30) Priority: 03.04.2023 KR 20230043661; 03.04.2023 US 202363456788 P; 04.04.2023 US 202363457114 P; 04.04.2023 US 202363457120 P
(71) Applicant: LG Electronics Inc., Seoul 07336 (KR)
(72) Inventor: PARK, Giwon, Seoul 06772 (KR); LEE, Seungmin, Seoul 06772 (KR); BACK, Seoyoung, Seoul 06772 (KR)
(74) Representative: Maikowski & Ninnemann Patentanwälte Partnerschaft mbB
(86) International application number: PCT/KR2024/004237
(87) International publication number: WO 2024/210456

(57) **Abstract**

Provided are a method for performing wireless communication by a first device, and an apparatus for supporting same. The method may comprise: obtaining configuration information related to a plurality of carriers; selecting a first carrier among the plurality of carriers, based on a channel busy ratio (CBR) measurement related to the first carrier being lower than a CBR threshold; and transmitting, to a second device, a first physical sidelink shared channel (PSSCH) based on the first carrier. For example, the first carrier may be determined as a carrier for detecting a hybrid automatic repeat request (HARQ)-based sidelink (SL) radio link failure (RLF).

## Description

### TECHNICAL FIELD

This disclosure relates to a wireless communication system.

### BACKGROUND ART

5G NR is a successive technology of long term evolution (LTE) corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with machine learning capabilities. The vision of the 6G system can have four aspects: intelligent connectivity, deep connectivity, holographic connectivity, and ubiquitous connectivity, and the 6G system can satisfy the requirements as shown in Table 1 below. In other words, Table 1 is an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

In one embodiment, provided is a method for performing wireless communication by a first device. The method may comprise: obtaining configuration information related to a plurality of carriers; selecting a first carrier among the plurality of carriers, based on a channel busy ratio (CBR) measurement related to the first carrier being lower than a CBR threshold; and transmitting, to a second device, a first physical sidelink shared channel (PSSCH) based on the first carrier. For example, the first carrier may be determined as a carrier for detecting a hybrid automatic repeat request (HARQ)-based sidelink (SL) radio link failure (RLF).

In one embodiment, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: obtaining configuration information related to a plurality of carriers; selecting a first carrier among the plurality of carriers, based on a channel busy ratio (CBR) measurement related to the first carrier being lower than a CBR threshold; and transmitting, to a second device, a first physical sidelink shared channel (PSSCH) based on the first carrier. For example, the first carrier may be determined as a carrier for detecting a hybrid automatic repeat request (HARQ)-based sidelink (SL) radio link failure (RLF).

In one embodiment, provided is a processing device configured to control a first device. The processing device may comprise: at least one processor; and at least one memory connected to the at least one processor and storing instructions. For example, the instructions, based on being executed by the at least one processor, cause the first device to perform operations comprising: obtaining configuration information related to a plurality of carriers; selecting a first carrier among the plurality of carriers, based on a channel busy ratio (CBR) measurement related to the first carrier being lower than a CBR threshold; and transmitting, to a second device, a first physical sidelink shared channel (PSSCH) based on the first carrier. For example, the first carrier may be determined as a carrier for detecting a hybrid automatic repeat request (HARQ)-based sidelink (SL) radio link failure (RLF).

In one embodiment, provided is a non-transitory computer-readable storage medium recording instructions. For example, the instructions, based on being executed, cause a first device to perform operations comprising: obtaining configuration information related to a plurality of carriers; selecting a first carrier among the plurality of carriers, based on a channel busy ratio (CBR) measurement related to the first carrier being lower than a CBR threshold; and transmitting, to a second device, a first physical sidelink shared channel (PSSCH) based on the first carrier. For example, the first carrier may be determined as a carrier for detecting a hybrid automatic repeat request (HARQ)-based sidelink (SL) radio link failure (RLF).

### BRIEF DESCRIPTION OF THE DRAWINGS

FIG. 1 shows a communication structure that can be provided in the 6G system, based on an embodiment of the present disclosure.
FIG. 2 shows an electromagnetic spectrum, based on an embodiment of the present disclosure.
FIG. 3 shows an example of an NTN typical scenario based on a transparent payload, based on an embodiment of the present disclosure.
FIG. 4 shows an example of an NTN typical scenario based on a regenerative payload, based on an embodiment of the present disclosure.
FIG. 5 shows an example of a sensing operation, based on an embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows a resource unit of CBR measurement, based on an embodiment of the present disclosure.
FIG. 10 shows a carrier selection method for HARQ-based SL RLF detection, based on an embodiment of the present disclosure.
FIG. 11 shows a carrier selection method for HARQ-based SL RLF detection, based on an embodiment of the present disclosure.
FIG. 12 shows a carrier selection method for HARQ-based SL RLF detection, based on an embodiment of the present disclosure.
FIG. 13 shows a method for performing wireless communication by a first device, based on an embodiment of the present disclosure.
FIG. 14 shows a method for performing wireless communication by a second device, based on an embodiment of the present disclosure.
FIG. 15 shows a communication system 1, based on an embodiment of the present disclosure.
FIG. 16 shows wireless devices, based on an embodiment of the present disclosure.
FIG. 17 shows a signal process circuit for a transmission signal, based on an embodiment of the present disclosure.
FIG. 18 shows another example of a wireless device, based on an embodiment of the present disclosure.
FIG. 19 shows a hand-held device, based on an embodiment of the present disclosure.
FIG. 20 shows a vehicle or an autonomous vehicle, based on an embodiment of the present disclosure.

### DETAILED DESCRIPTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

In the present disclosure, "configured or defined" may be interpreted as being configured or pre-configured to a device through pre-defined signaling (e.g., SIB, MAC, RRC) from a base station or network. In the present disclosure, "configured or defined" may be interpreted as being pre-configured to a device.

The technology proposed in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), long term evolution (LTE), 5G NR, and so on.

The technology proposed in the present disclosure may be implemented as 6G wireless technology and may be applied to various 6G systems. For example, 6G systems may have key factors such as enhanced mobile broadband (eMBB), ultra-reliable low latency communications (URLLC), massive machine-type communication (mMTC), artificial intelligence (AI) unified communications, tactile internet, high throughput, high network capacity, high energy efficiency, low backhaul and access network congestion, and enhanced data security.

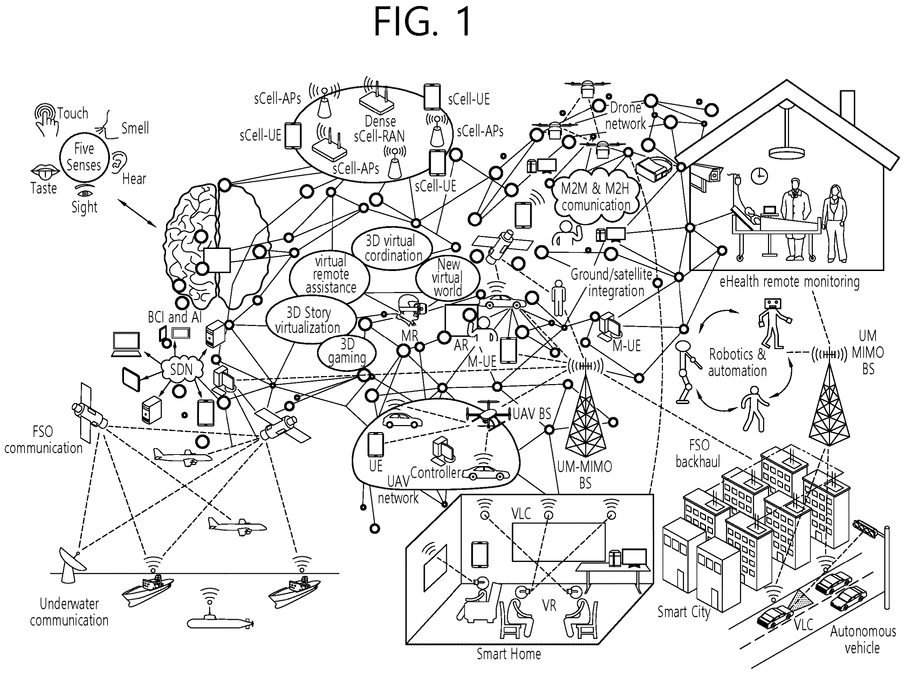

FIG. 1 shows a communication structure that can be provided in the 6G system, based on an embodiment of the present disclosure. The embodiment of FIG. 1 may be combined with various embodiments of the present disclosure.

New network characteristics in 6G may include:
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each procedure of signal processing, which will be described below).
- Seamless integration wireless information and energy transfer
- Ubiquitous super 3D connectivity: Access to drones, networks for very low Earth orbit satellites and core network functions will create super 3D connectivity in 6G ubiquitous.

In the above new network characteristics of 6G, some general requirements may be as follows.
- Small cell networks
- Ultra-dense heterogeneous network
- High-capacity backhaul
- Radar technology integrated with mobile technology: High-precision localization (or location-based services) through communication is one of the functions of the 6G wireless communication system. Therefore, radar systems will be integrated with 6G networks.
- Softwarization and virtualization

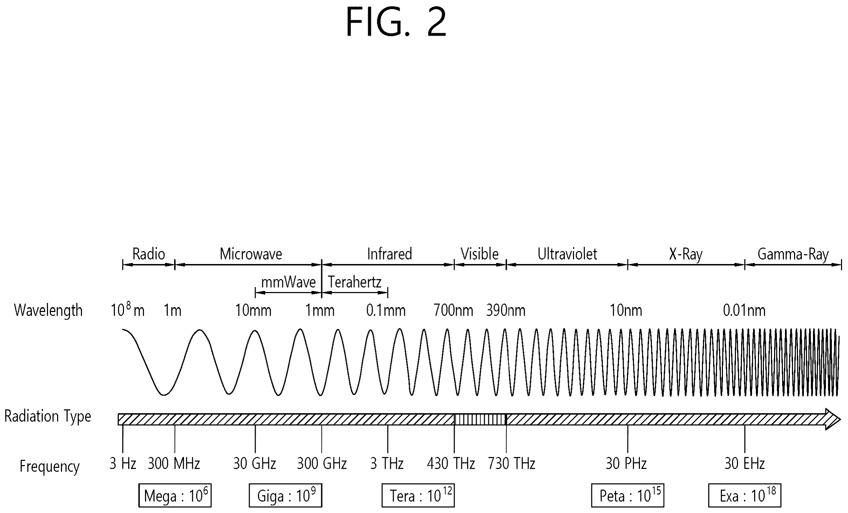

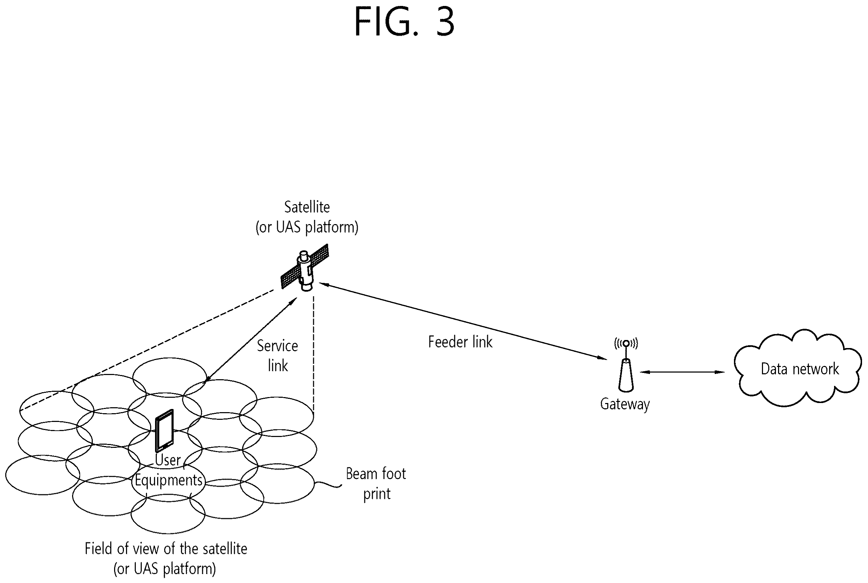

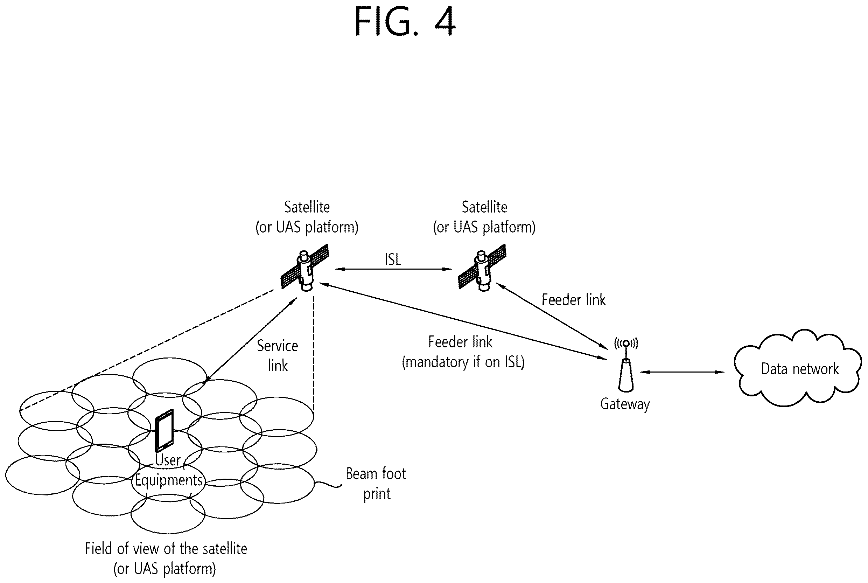

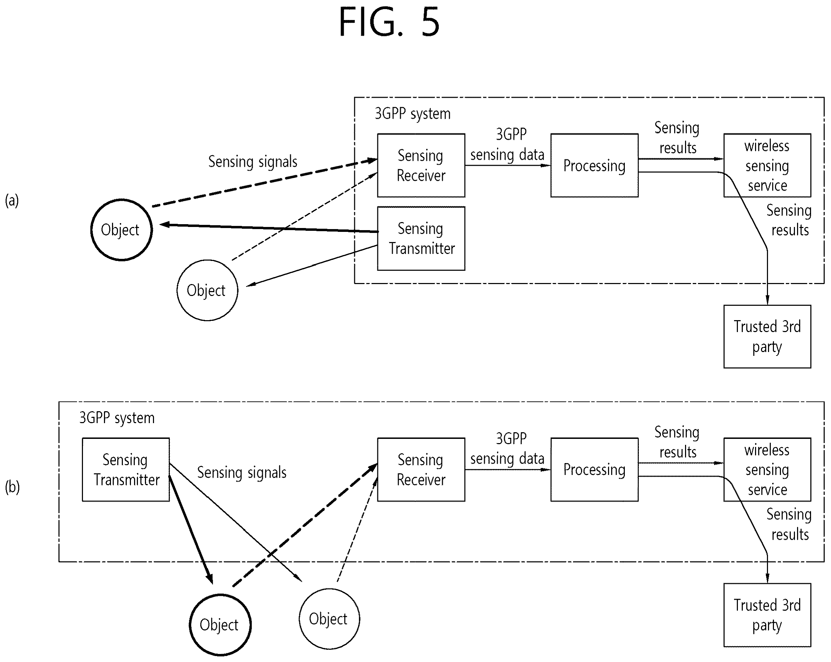

The following describes the key enabling technologies for 6G systems.
- Artificial Intelligence: The introduction of AI in telecommunications can streamline and improve real-time data transfer. AI can use numerous analytics to determine how complex target tasks are performed, meaning AI can increase efficiency and reduce processing delays. Time-consuming tasks such as handover, network selection, and resource scheduling can be done instantly by using AI. AI can also play an important role in M2M, machine-to-human, and human-to-machine communications. In addition, AI can be a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (terahertz communication): Data rates can be increased by increasing bandwidth. This can be accomplished by using sub-THz communication with a wide bandwidth and applying advanced massive MIMO technology. THz waves, also known as submillimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. Of the defined THz band, 300 GHz-3 THz is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 illustrates an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies, for which highly directive antennas are indispensable. The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO Technology (Large-scale MIMO)
- Hologram Beamforming (HBF, Hologram Bmeaforming)
- Optical wireless technology
- Free-space optical transmission backhaul network (FSO Backhaul Network)
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- Unmanned aerial vehicles (UAVs): UAVs or drones will be an important component of 6G wireless communications. In most cases, high-speed data wireless connectivity may be provided using UAV technology. Base Station (BS) entities may be installed on UAVs to provide cellular connectivity. UAVs may have certain features not found in fixed BS infrastructure, such as easy deployment, strong line-of-sight links, and controlled degrees of freedom for mobility. During emergencies, such as natural disasters, the deployment of terrestrial telecom infrastructure is not economically feasible and sometimes cannot provide services in volatile environments. UAVs can easily handle these situations. UAVs will be a new paradigm in wireless communications. This technology facilitates the three basic requirements of wireless networks, which are eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility (AAM): AAM is the parent concept of urban air mobility (UAM), which is a means of air transportation that can be used in urban centers, and can refer to a means of transportation that includes movement between urban centers and regional bases.
- Autonomous Driving (autonomous driving, self-driving): Vehicle to Everything (V2X), a key element in building an autonomous driving infrastructure, can be a technology that enables vehicles to communicate and share information with various elements on the road, such as vehicle-to-vehicle (V2V) and vehicle-to-infrastructure (V2I) wireless communication, in order to perform autonomous driving. In order to maximize the performance of autonomous driving and ensure high safety, fast transmission speeds and low latency technologies are essential. In addition, in the future, autonomous driving may need to go beyond delivering warnings or guidance messages to the driver and actively intervene in vehicle operation, requiring direct control of the vehicle in dangerous situations. To do this, the amount of information that needs to be transmitted and received can be massive, so 6G is expected to maximize autonomous driving with faster transmission speeds and lower latency than 5G.
- Non-terrestrial networks (NTN): An NTN may represent a network or network segment that uses radio frequency (RF) resources mounted on a satellite (or unmanned aerial system (UAS) platform). FIG. 3 shows an example of an NTN typical scenario based on a transparent payload, based on an embodiment of the present disclosure. FIG. 4 shows an example of an NTN typical scenario based on a regenerative payload, based on an embodiment of the present disclosure. The embodiment of FIG. 3 or FIG. 4 may be combined with various embodiments of the present disclosure. Referring to FIG. 3, a satellite (or UAS platform) may establish a service link with a UE. The satellite (or UAS platform) may be connected to the gateway via a feeder link. The satellite may be connected to the data network via the gateway. A beam footprint may refer to an area that can receive signals transmitted by a satellite. Referring to FIG. 4, a satellite (or UAS platform) may create a service link with a UE. A satellite (or UAS platform) connected to a UE may be connected to other satellites (or UAS platforms) via inter-satellite links (ISL). Other satellites (or UAS platforms) can be connected to the gateway via feeder links. Satellites may be connected to data networks via other satellites and gateways, based on the regenerative payload. If an ISL does not exist between a satellite and another satellite, a feeder link between the satellite and the gateway may be required. FIG. 3 and FIG. 4 are only examples of NTN scenarios, and NTN can be implemented based on various types of scenarios. For example, a satellite (or UAS platform) may implement a transparent or regenerative (with on-board processing) payload. For example, a satellite (or UAS platform) may generate multiple beams over a designated service area based on the field of view of the satellite (or UAS platform). For example, the field of view of the satellite (or UAS platform) may be different based on the on-board antenna diagram and the minimum elevation angle. For example, transparent payloads may include radio frequency filtering, frequency conversion, and amplification. Accordingly, the waveform signal repeated by the payload may not be changed. For example, a regenerative payload may include radio frequency filtering, frequency conversion and amplification, demodulation/decryption, switching and/or routing, and coding/modulation. For example, a regenerative payload may be substantially equivalent to equipping a satellite (or UAS platform) with all or part of the base station functionality.
- Integrated sensing and communication (ISAC): Wireless sensing is a technology that obtains information about the environment and/or the characteristics of objects within the environment by using radio frequencies to determine the instantaneous linear speed, angle, and distance (range) of the object. Since the radio frequency sensing function does not require connection to the object through a device in the network, it can provide a service for determining the location of the object without a device. The function to obtain range, speed, and angle information from radio frequency signals can provide a wide range of new capabilities, such as detection of various objects, object recognition (e.g., vehicles, humans, animals, UAVs), and high-precision positioning, tracking, and activity recognition. Wireless sensing services can provide information to various industries (e.g., unmanned aerial vehicles, smart homes, V2X, factories, railroads, public safety, etc.), enabling applications that provide, for example, intruder detection, assisted vehicle control and navigation, trajectory tracking, collision avoidance, traffic management, health and traffic management, etc. In some cases, wireless sensing may use non-3GPP type sensors (e.g., radar, cameras) to further support 3GPP-based sensing. For example, the operation of a wireless sensing service, that is, the sensing operation, may depend on the processing of transmission, reflection, and scattering of wireless sensing signals. Therefore, wireless sensing may provide an opportunity to enhance existing communication systems from communication networks to wireless communication and sensing networks. FIG. 5 shows an example of a sensing operation, based on an embodiment of the present disclosure. The embodiment of FIG. 5 may be combined with various embodiments of the present disclosure. Specifically, (a) of FIG. 5 illustrates an example of sensing using a sensing receiver and a sensing transmitter at the same location (e.g., monostatic sensing), and (b) of FIG. 5 illustrates an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

The physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC _CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

A radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or extened CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

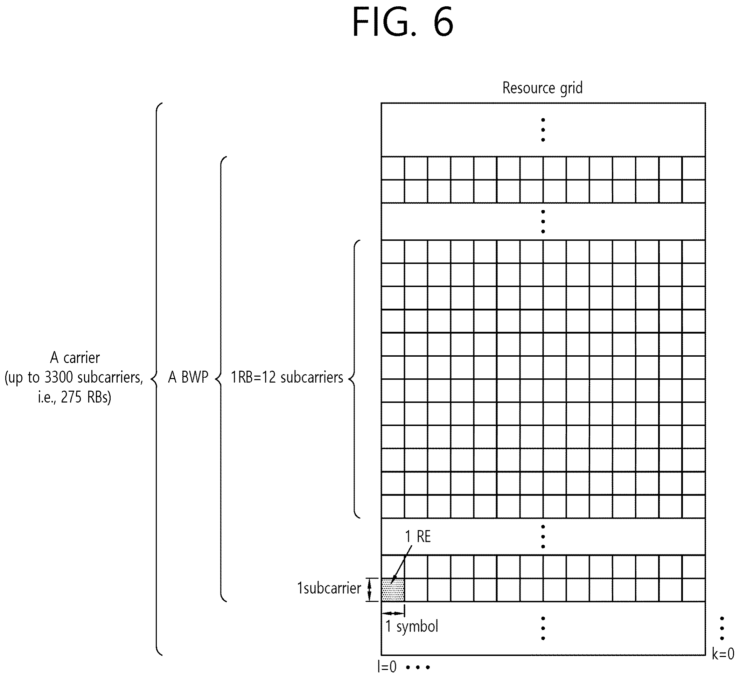

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain. A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier.

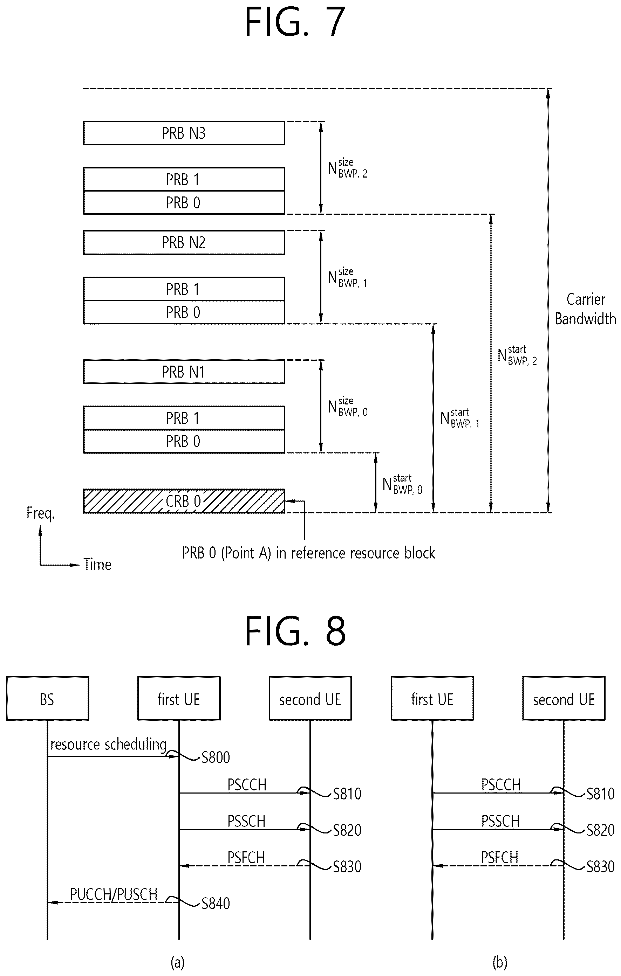

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as a sidelink (SL) -specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, PSCCH may be replaced with a control channel, a physical control channel, a control channel related to the sidelink, a physical control channel related to the sidelink, etc. In the present disclosure, PSSCH may be replaced with a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in the resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling.

Referring to (b) of FIG. 8, in the resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Meanwhile, operations related to congestion control in sidelink (SL) are as follows.

For example, the UE may determine whether the energy measured in unit time/frequency resources is above a certain level, and may control the amount and frequency of its transmission resources according to the ratio of unit time/frequency resources in which energy above a certain level is observed. In the present disclosure, the ratio of time/frequency resources in which energy above a certain level is observed may be defined as the channel busy ratio (CBR). The UE may measure CBR for channel/frequency. Additionally, the UE may transmit the measured CBR to the network/base station.

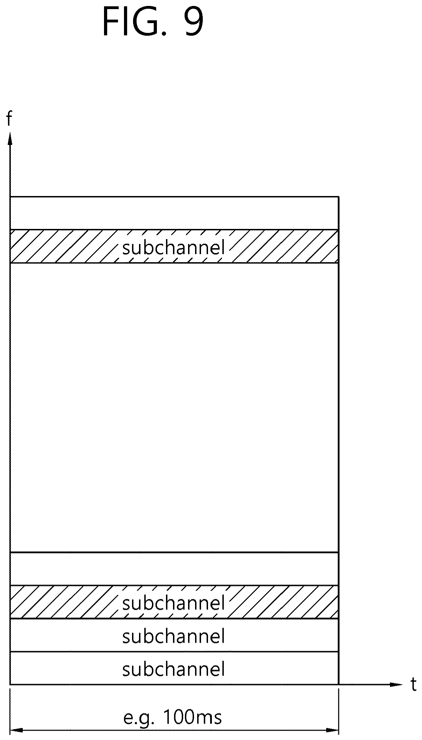

FIG. 9 shows a resource unit of CBR measurement, based on an embodiment of the present disclosure. The embodiment of FIG. 9 may be combined with various embodiments of the present disclosure.

Referring to FIG. 9, the CBR may mean the number of subchannels whose received signal strength indicator (RSSI) measurement result value is greater than a pre-configured threshold as a result of the UE measuring RSSI on a subchannel basis during a specific period (e.g., 100 ms). In addition, the CBR may mean the ratio of subchannels with a value greater than a pre-configured threshold among subchannels during a specific period. For example, in the embodiment of FIG. 9, if it is assumed that the hatched subchannel is a subchannel with a value greater than a pre-configured threshold, the CBR may mean the ratio of the hatched subchannel during a 100 ms period. Additionally, the UE may report the CBR to the base station.

For example, when PSCCH and PSSCH are multiplexed in the frequency domain, the UE may perform one CBR measurement for one resource pool. Here, if the PSFCH resource is configured or pre-configured, the PSFCH resource may be excluded from the CBR measurement.

Furthermore, congestion control may be necessary considering the priority of traffic (e.g., packets). For this purpose, for example, the UE may measure channel occupancy ratio (CR). Specifically, the UE may measure the CBR, and the UE may determine the maximum value of the channel occupancy ratio (CRk) (CRlimitk) that can be occupied by traffic corresponding to each priority (e.g., k) according to the CBR. For example, the UE may derive the maximum value of channel occupancy ratio (CRlimitk) for each traffic priority based on a pre-determined table of CBR measurement values. For example, in the case of relatively high priority traffic, the UE may derive a relatively large maximum channel share. Afterwards, the UE may perform congestion control by limiting the total channel occupancy ratio of traffic with a traffic priority k lower than i to a certain value or less. According to this method, stronger channel occupancy ratio restriction may be applied to relatively low priority traffic.

In addition, the UE may perform SL congestion control using methods such as adjusting the transmission power, dropping packets, determining whether to retransmit, and adjusting the transmission RB size (MCS adjustment).

Meanwhile, in the prior art, if the transmitting UE does not receive PSFCH (e.g., HARQ ACK or HARQ NACK) from the receiving UE after transmitting the PSCCH/PSSCH, the discontinuous transmission (DTX) count is increased by 1 and when the DTX count reaches the threshold, sidelink (SL) radio link failure (RLF) may be declared. In addition, when the UE declares SL RLF for the unicast link, the UE may release the PC5 RRC connection with SL RLF declared and may report the PC5 link identifier related to the PC5 RRC connection released to the higher layer (e.g., V2X layer). In addition, the UE may report to the base station that the SL RLF has occurred. At this time, the UE may report the unicast link information (e.g., destination layer 2 ID) where the RLF occurred and the cause of the SL RLF together.

Meanwhile, in conventional LTE V2X, the UE that supports multi-channel operation (e.g., multi-carrier operation or carrier aggregation (CA)) may select specific carrier for transmitting sidelink data, and may transmit sidelink data through the selected resource and the selected carrier by selecting a resource available in the selected carrier.

Meanwhile, according to the prior art, when the UE performs transmission based on a carrier, the UE may measure the CBR for the candidate carrier obtained from RRC, and may perform transmission based on the selected carrier by selecting a carrier whose CBR measurement value is lower than a threshold. Additionally, according to the prior art, when a PC5 RRC connection is established between UEs, the transmitting UE may perform a HARQ-based SL RLF detection operation for the PC5 RRC connection. However, in sidelink (SL) carrier aggregation (CA)-based operation, when the transmitting UE performs a HARQ-based SL RLF detection operation for the PC5 RRC connection as above, if a carrier that counts discontinuous transmission (DTX) and detects SL RLF based on this is not defined among the plurality of carriers associated with the PC5 RRC connection, the following problems may occur. For example, when the transmitting UE perform DTX counting by randomly selecting a carrier among the plurality of carriers which are associated with PC5 RRC, a carrier with a CBR measurement value higher than the threshold may be randomly selected. In this case, for example, the probability that receiving UE fails to receive a transmission performed based on the selected carrier may increase and the probability that transmitting UE receives feedback from the receiving UE may decrease, which may cause the DTX count to quickly reach the threshold. That is, even if the SL RLF is detected by the DTX count reaching the threshold, since the DTX counting was performed based on a carrier with high congestion level, the reliability related to the detection of the SL RLF may be decreased. In addition, for example, if a PC5 RRC connection is established between UEs, but the carrier with high congestion level is selected as described above and the SL RLF detection operation is performed based on the selected carrier, since the corresponding PC5 RRC connection must be released and a resource must be reallocated to perform a new PC5 RRC connection, a resource related to the establishment of a PC5 RRC connection may not be used efficiently. And, for example, repetitive SL RLF detection and PC5 RRC connection establishment may cause latency in SL-based communication.

In the present disclosure, the PC5 RRC connection establishment operation of a UE supporting multi-carrier operation is proposed as follows.

For example, in sidelink multi-carrier operation, PC5 RRC connection may be established or configured for each sidelink carrier (or for each sidelink HARQ entity mapped to sidelink carrier). For example, management related to sidelink data transmission (e.g., SL-SCH transmission) (e.g., flushing of HARQ buffer and/or soft buffer of sidelink process, sidelink process management or allocation sidelink TB to unoccupied sidelink process, etc.) may be performed in the sidelink HARQ entity. In addition, for example, in sidelink multi-carrier operation, there may be one sidelink HARQ entity per carrier, and the sidelink HARQ entity mapped to the sidelink carrier may perform a management related to sidelink data transmission per carrier (e.g., flushing of HARQ buffer and/or soft buffer of sidelink process, sidelink process management or allocation sidelink TB to unoccupied sidelink process, etc.). Therefore, for example, it may be desirable for the PC5 RRC connection to be managed on per each carrier (or per each sidelink HARQ entity mapped to sidelink carrier).

For example, if a sidelink UE and a counterpart sidelink UE establish a PC5 unicast link (or PC5-S connection), a PC5 RRC connection may be established for each sidelink carrier configured for sidelink communication (or being used for sidelink communication). For example, the UE which establishes PC5 unicast link (or PC5-S connection) may proceed with sidelink capability negotiation process through the exchange of PC5 RRC messages for each sidelink carrier. In addition, for example, the UE which establishes PC5 unicast link (or PC5-S connection) may proceed with sidelink radio bearer configuration (e.g., SL data radio bearer (DRB) configuration) with each other by performing PC5 RRC reconfiguration process through the exchange of PC5 RRC messages (e.g., RRCReconfigurationSidelink message or RRCReconfigurationCompleteSidelink message) for each sidelink carrier. For example, the allowed sidelink carrier index information mapped to the corresponding radio bearer may be included in the sidelink radio bearer information. For example, the sidelink radio bearer configured for each sidelink carrier (e.g., the sidelink radio bearer configured through PC5 RRC reconfiguration of PC5 RRC connection for each specific sidelink carrier) may be used only for sidelink communication through the corresponding sidelink carrier (e.g., carrier with PC5 RRC reconfiguration performed or the allowed sidelink carrier included in sidelink radio bearer information configured in PC5 RRC reconfiguration process).

In addition, for example, the UE may declare SL RLF for each PC5 RRC connection established for each sidelink carrier (e.g., If DTX is detected as much as a pre-configured threshold or more than the threshold on the corresponding sidelink carrier, the SL RLF may be declared. Or, if HARQ NACK feedback is detected as much as the pre-configured threshold or more than the threshold in response to PSCCH/PSSCH transmission on the corresponding sidelink carrier, the SL RLF may be declared). For example, if the SL RLF is declared on the specific sidelink carrier, the UE may release the PC5 RRC connection of the corresponding carrier and may report to the upper layer (e.g., V2X layer) and the base station the PC5 link identifier related to the released PC5 RRC connection, sidelink carrier index information related to the released PC5 RRC connection, SL RLF cause and source layer-2 ID/destination layer-2 ID.

In addition, for example, the UE may declare PC5 RRC reconfiguration failure for each PC5 RRC connection established for each sidelink carrier (e.g., if the UE transmits RRCReconfigurationSidelink message and does not receive RRCReconfigurationCompleteSidelink message or RRCReconfigurationFailureSidelink message until the expiration of T400 timer on the corresponding sidelink carrier, the UE may declare PC5 RRC reconfiguration failure.). For example, if the PC5 RRC reconfiguration failure is declared on the specific sidelink carrier, (considering that SL RLF has occurred on the corresponding sidelink carrier) the UE may release PC5 RRC connection of the corresponding carrier and may report to the higher layer (e.g., V2X layer) and the base station the PC5 link identifier related to the released PC5 RRC connection, sidelink carrier index information related to the released PC5 RRC connection, PC5 RRC reconfiguration failure cause and source layer-2 ID/destination layer-2 ID.

In the present disclosure, the SL RLF operation of a UE supporting multi-carrier operation is proposed as follows.

For example, by managing the numConsecutiveDTX parameter for each sidelink carrier (or sidelink HARQ entity of each sidelink carrier), the transmitting UE may increase and manage the DTX count for each carrier when DTX occurs.

For example, even if the transmitting UE establishes a PC5 RRC connection commonly used for all carriers, numConsecutiveDTX count management may be managed for each sidelink carrier of the PC5 RRC connection to perform DTX counting. And, for example, when the numConsecutiveDTX count for each carrier reaches a pre-configured threshold, the SL RLF may be declared on the corresponding sidelink carrier. For example, when the SL RLF is declared on the specific sidelink carrier, the UE may report to the higher layer (e.g., V2X layer) and the base station the carrier index information of the corresponding carrier, SL RLF cause and source layer-2 ID/destination layer-2 ID. For example, if the UE declares SL RLF on the configured sidelink carrier or on all sidelink carriers in operation (or in use), the UE may release the PC5 RRC connection and may report to the higher layer (e.g., V2X layer) and the base station the PC5 link identifier related to the released PC5 RRC connection, all sidelink carrier index information related to the released PC5 RRC connection, SL RLF cause and source layer-2 ID/destination layer-2 ID.

In the present disclosure, the sidelink RLF operation of the UE is proposed as follows.

For example, when parameters (e.g., sl-MaxNumConsecutiveDTX: this field may indicate the maximum number of consecutive HARQ DTXs before triggering the sidelink RLF. Or, numConsecutiveDTX: the UE may increase the corresponding parameter by 1 when DTX occurs and may declare SL RLF on the PC5 RRC connection related to the SL carrier, SL BWP or SL HARQ entity when numConsecutiveDTX reaches sl-MaxNumConsecutiveDTX) for sidelink RLF operation for each SL carrier, for each SL bandwith part (BWP) or for each SL HARQ entity are (differently) configured or managed, the operation of the UE (e.g., the transmitting UE) may be as follows.

For example, the UE may accumulate counting of the plurality of SL RLF parameter (e.g., numConsecutiveDTX) mapped to the plurality of SL carrier/SL BWP/SL HARQ entity related to the PC5 RRC connection and may declare the SL RLF on the PC5 RRC connection related to the plurality of SL carrier/SL BWP/SL HARQ entity and release the corresponding PC5 RRC connection, when the accumulated counting reaches sl-MaxNumConsecutiveDTX. In addition, for example, the UE may perform numConsecutiveDTX counting for the plurality of SL carrier/SL BWP/SL HARQ entity using the minimum value (or maximum value, or (weighted) average value) of the plurality of SL RLF parameter (e.g., sl-MaxNumConsecutiveDTX) and may declare SL RLF on the PC5 RRC connection related to the plurality of SL carrier/SL BWP/SL HARQ entity and release the corresponding PC5 RRC connection, when the DTX counting reaches the minimum value (or maximum value, or (weighted) average value) of sl-MaxNumConsecutiveDTX.

Or, for example, if the numConsecutiveDTX counting reaches sl-MaxNumConsecutiveDTX or minimum value (or maximum value, or (weighted) average value) of sl-MaxNumConsecutiveDTX for at least one SL carrier/SL BWP/SL HARQ entity among the plurality of SL carrier/SL BWP/SL HARQ entity related to the PC5 RRC connection, the UE may declare the SL RLF on the PC5 RRC connection related to the plurality of SL carrier and may release the corresponding PC5 RRC connection.

Or, for example, if each numConsecutiveDTX counting all reaches sl-MaxNumConsecutiveDTX or minimum value (or maximum value, or (weighted) average value) of sl-MaxNumConsecutiveDTX for the plurality of SL carrier/SL BWP/SL HARQ entity related to the PC5 RRC connection, the UE may declare the SL RLF on the PC5 RRC connection related to the plurality of SL carrier/SL BWP/SL HARQ entity and may release the corresponding PC5 RRC connection.

For example, if parameters (e.g., sl-MaxNumConsecutiveDTX: this field may indicate the maximum number of consecutive HARQ DTXs before triggering the sidelink RLF. Or, numConsecutiveDTX: the UE may increase the corresponding parameter by 1 when DTX occurs and may declare SL RLF on the PC5 RRC connection related to the SL carrier, SL BWP or SL HARQ entity when numConsecutiveDTX reaches sl-MaxNumConsecutiveDTX) for sidelink RLF operation for each SL carrier, for each SL BWP or for each SL HARQ entity are configured with same value or managed with same (or if commonly applied SL RLF parameters (e.g., sl-MaxNumConsecutiveDTX: this field may indicate the maximum number of consecutive HARQ DTXs before triggering the sidelink RLF. Or, numConsecutiveDTX: the UE may increase the corresponding parameter by 1 when DTX occurs and may declare SL RLF on the PC5 RRC connection related to the SL carrier, SL BWP or SL HARQ entity when numConsecutiveDTX reaches sl-MaxNumConsecutiveDTX) are configured for each sidelink unicast session (or for each PC5 RRC connection)), the operation of the UE (e.g., the transmitting UE) may be as follows.

For example, the UE may commonly perform accumulating of numConsecutiveDTX counting for the plurality of SL carrier/SL BWP/SL HARQ entity using identically configured sidelink RLF parameter, may declare SL RLF for the PC5 RRC connection related to the plurality of SL carrier/SL BWP/SL HARQ entity when the numConsecutiveDTX counting reaches sl-MaxNumConsecutiveDTX, and may release the PC5 RRC connection.

Or, for example, when the numConsecutiveDTX counting related to at least one of the plurality of SL carrier/SL BWP/SL HARQ entity related to the PC5 RRC connection reaches the sl-MaxNumConsecutiveDTX, the UE may declare SL RLF for the PC5 RRC connection related to the plurality of SL carrier/SL BWP/ SL HARQ entity and may release the PC5 RRC connection.

Or, for example, when each of all numConsecutiveDTX counting for the plurality of SL carrier/SL BWP/SL HARQ entity related to the PC5 RRC connection reaches sl-MaxNumConsecutiveDTX, the UE may declare SL RLF for the PC5 RRC connection related to the plurality of SL carrier/SL BWP/ SL HARQ entity and may release the PC5 RRC connection.

Meanwhile, in the present disclosure, the UE may perform the operation as follows.
(operation #1) For example, the UE may perform SL DTX counting (e.g., counting of numConsecutiveDTX) for each SL carrier/SL BWP/SL HARQ entity by configuring and/or applying the SL RLF parameter (e.g., sl-MaxNumConsecutiveDTX, numConsecutiveDTX) for each SL carrier/SL BWP/SL HARQ entity.
(operation #2) Or, for example, although the SL RLF parameter (e.g., sl-MaxNumConsecutiveDTX, numConsecutiveDTX) may be configured and/or applied for each SL carrier/SL BWP/SL HARQ entity, the SL DTX counting (e.g., counting of numConsecutiveDTX) may be cumulatively counted together in the plurality of (or pre-configured) SL carrier/SL BWP/SL HARQ entity.
(operation #3) Or, for example, the SL RLF parameter may be commonly configured and/or applied for the plurality of (or pre-configured) SL carrier/SL BWP/SL HARQ entity, and the SL DTX counting (e.g., counting of numConsecutiveDTX) may be commonly counted for the plurality of (or pre-configured) SL carrier/SL BWP/SL HARQ entity.

In the present disclosure, in relation to the above-described operations (e.g., the operation #1, #2, #3), the condition for the UE to declare the SL RLF may be as follows.

For example, when the counting number of sidelink DTX (e.g., numConsecutiveDTX) counted for each pre-configured SL carrier/SL BWP/SL HARQ entity (related to the PC5 RRC connection) reaches the relevant threshold (e.g., sl-MaxNumConsecutiveDTX), the UE performing the above-described operation may declare the SL RLF (e.g., in case of the operation #1).

Or, for example, when each SL DTX counting (e.g., numConsecutiveDTX) value in all SL carrier/SL BWP/SL HARQ entity (related to the PC5 RRC connection) reaches the relevant threshold (e.g., sl-MaxNumConsecutiveDTX) (or when counting is performed by accumulating each count from all SL carrier/SL BWP/SL HARQ entity and the SL DTX counting value reaches the sl-MaxNumConsecutiveDTX), the UE performing the above-described operation may declare the SL RLF (e.g., in case of the operation #1, #2).

Or, for example, when the SL DTX counting value in a pre-configured number (e.g., "1") of SL carrier/SL BWP/SL HARQ entities among the plurality of SL carrier/SL BWP/SL HARQ entity (related to the PC5 RRC connection) respectively reaches the relevant threshold (e.g., sl-MaxNumConsecutiveDTX) (or when numConsecutiveDTX counting value for pre-configured number (e.g., "1") of SL carrier/SL BWP/SL HARQ entities among the plurality of SL carrier/SL BWP/SL HARQ entity reaches the relevant threshold (e.g., sl-MaxNumConsecutiveDTX)), the UE performing the above-described operation may declare the SL RLF (e.g., in case of the operation #1, #2, #3).

For example, in the case of the above-described operation (e.g., operation #2 or operation #3), the declaration of the SL RLF may be limited to the cases where this event (e.g., numConsecutiveDTX counting value reaches the relevant threshold (e.g., sl-MaxNumConsecutiveDTX)) occurs within a pre-configured timer. In this case, for example, the timer may be started when DTX counting is performed or the SL RLF is declared in one SL carrier/SL BWP/SL HARQ entity.

Or, for example, the UE may apply or perform DTX counting (e.g., numConsecutiveDTX) together for the same unicast service or the (one of or plurality of) SL carrier/SL BWP/SL HARQ entity related to the destination layer-2 ID. For example, if unicast session A and unicast session B of the UE are the same unicast service, when the DTX occurs in the unicast session A, the UE may increase the DTX counting by 1 not only in the unicast session (or PC5 RRC connection) A but also in the unicast session (or PC5 RRC connection). That is, for example, if unicast session A and unicast session B of the UE are the same unicast service, when the SL RLF is declared in the unicast session A, the UE may equally declare the SL RLF in the unicast session B (or PC5 RRC connection).

In addition, for example, if (in situation where the plurality of service or destination layer-2 ID are operational for the unicast session) the SL DTX counting (e.g., numConsecutiveDTX) value for the SL carrier/SL BWP/SL HARQ entity related to the specific unicast service or destination layer-2 ID reaches the pre-configured threshold number, the SL RLF may be declared for the relevant unicast session (or relevant PC5 RRC connection).

In the present disclosure, a method for selecting/limiting the SL carrier/SL BWP/SL HARQ entity used for DTX counting related to SL RLF of a UE supporting multi-carrier and a device supporting the same are proposed as follows.

For example, the UE may perform SL DTX counting (e.g, numConsecutiveDTX) only for the SL carrier/SL BWP/SL HARQ entity that satisfy the condition(s) below among the plurality of SL carrier/SL BWP/SL HARQ entity related to the unicast session or PC5 RRC connection.

For example, the UE may perform SL DTX counting (e.g., numConsecutiveDTX) by selecting the SL carrier/SL BWP/SL HARQ entity which is lower (or higher) than the (pre-)configured channel busy ratio (CBR) threshold. For example, the CBR threshold may be configured per priority or per quality of service (QoS) profile (e.g., packet delay budget (PDB), reliability) or per SL radio bearer or per logical channel.

For example, the UE may perform SL DTX counting (e.g., numConsecutiveDTX) by selecting the SL carrier/SL BWP/SL HARQ entity on which the physical sidelink feedback channel (PSFCH) is configured.

For example, the UE may perform the SL DTX counting (e.g., numConsecutiveDTX) by selecting the SL carrier/SL BWP/SL HARQ entity which has higher (or lower) (than the pre-configured threshold) remaining channel occupancy ratio (CR) compared to CR limit value related to congestion control.

For example, the UE may perform the SL DTX counting (e.g., numConsecutiveDTX) by selecting the SL carrier/SL BWP/SL HARQ entity on which the (pre-)configured message (e.g., PC5 RRC message related to PC5 RRC reconfiguration (e.g., RRCReconfigurationSidelink, RRCReconfigurationCompleteSidelink, RRCReconfigurationFailureSidlelink) or PC5-S signal (e.g., direct communication request (DCR)/ direct communication accept (DCA) message) or sidelink message using the SL signaling radio bearer (SRB) 0/SL SRB 1/SL SRB 2/SL SRB 3/SL SRB 4, etc.) is transmitted.

For example, the UE may perform the SL DTX counting (e.g., numConsecutiveDTX) by selecting the SL carrier/SL BWP/SL HARQ entity on which the (pre-)configured sidelink channel/signal (e.g., SL-synchronization signal block (SSB)) is (actually) transmitted.

For example, the UE may perform the SL DTX counting (e.g., numConsecutiveDTX) by selecting the SL carrier/SL BWP/SL HARQ entity agreed upon between the UEs. For example, it may be limited to the SL carrier/SL BWP/SL HARQ entity of the lowest (or highest) or pre-configured index.

For example, the UE may perform the SL DTX counting (e.g., numConsecutiveDTX) by selecting the SL carrier/SL BWP/SL HARQ entity on which the packet with sidelink priority or sidelink reliability above the (pre-)configured threshold level is transmitted.

For example, the UE may perform the SL DTX counting (e.g., numConsecutiveDTX) by selecting the SL carrier/SL BWP/SL HARQ entity on which the logical channel (LCH) with a HARQ feedback enabled property (or resource block (RB) from which HARQ feedback enabled data is provided) is configured.

For example, the UE may perform the SL DTX counting (e.g., numConsecutiveDTX) by selecting the SL carrier/SL BWP/SL HARQ entity on which the PC5 RRC signaling (e.g., RRCReconfigurationSidelink, RRCReconfigurationCompleteSidelink, RRCReconfigurationFailureSidlelink) is transmitted (or on which the pre-configured PC5-S message (e.g., DCR message) is transmitted).

Or, for example, the SL carrier which is used for SL RLF or SL DTX counting (e.g., numConsecutiveDTX), etc. may be limited/configured to a carrier belonging to the (pre-configured) synchronization (SYNC) (reference) carrier (and/or a carrier on which the SL-SSB transmission is actually performed) or may also be configured to a carrier on which the SYNC reference entity used to derive SL carrier aggregation (CA) carrier timing has been detected.

Or, for example, when the UE trying to perform the unicast operation in multi-carrier performs the SL carrier/SL BWP/SL resource pool/SL HARQ entity (re-)selection operation, the UE may preferentially select the carrier with the PSFCH resource configured or the SL carrier/SL BWP/SL resource pool/SL HARQ entity with the HARQ feedback enabled LCH configured or the SL carrier/SL BWP/SL resource pool/SL HARQ entity with the radio bearer for the HARQ feedback enabled LCH configured, among the SL carrier/SL BWP/SL resource pool/SL HARQ entity related to the service in which the UE is interested or source layer-2 ID/destination layer-2 ID pair (or destination layer-2 ID).

In addition, for example, when there are the plurality of SL carrier/SL BWP/SL resource pool/SL HARQ entity which has the CBR measurement value lower than the pre-configured CBR threshold (per sidelink priority), the UE may apply the above rule(s). For example, the (minimum) selection number of the SL carrier/SL BWP/SL resource pool/SL HARQ entity with the PSFCH resource configured for each PC5 RRC connection may be configured differently per sidelink priority or per CBR or per QoS profile or per sidelink reliability.

For example, the SL RLF may be declared with different pre-configured criteria (e.g., SL CSI, hypothetical block error rate (BLER)) for SL carrier/SL BWP/SL resource pool/SL HARQ entity on which the PSFCH is not configured among the plurality of SL carrier/SL BWP/SL resource pool/SL HARQ entity related to the same service or source layer-2 ID/destination layer-2 ID pair (or destination layer-2 ID).

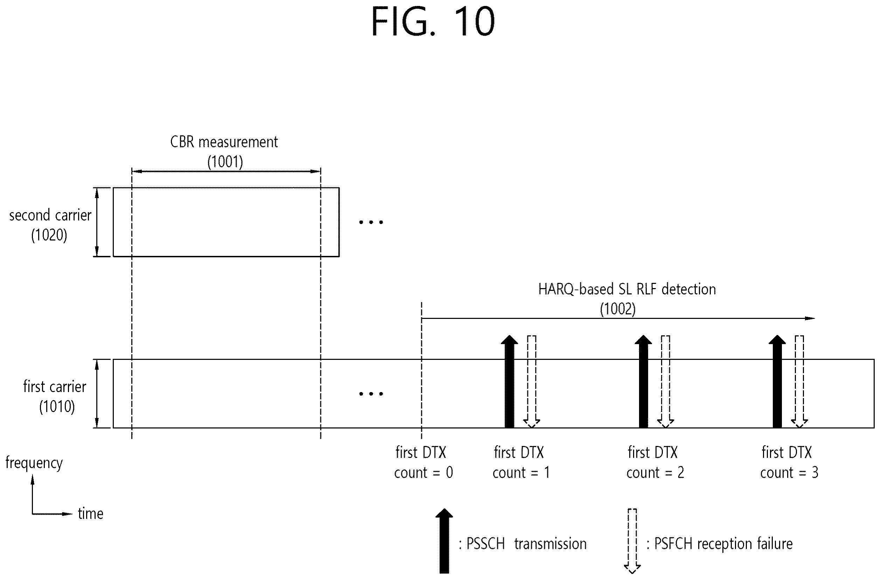

FIG. 10 shows a carrier selection method for HARQ-based SL RLF detection, based on an embodiment of the present disclosure. The embodiment of FIG. 10 may be combined with various embodiments of the present disclosure.

Referring to FIG. 10, the UE performing SL-based communication may establish PC5 RRC connection with the counterpart UE. And, for example, the PC5 RRC connection may be associated with the plurality of carriers. For example, the plurality of carries may include a first carrier 1010 and a second carrier 1020. For example, the parameters to control the operation related to the SL RLF may be configured on the plurality of carriers. For example, the discontinuous transmission (DTX) count may be configured for each carrier included in the plurality of carriers. That is, for example, a first DTX count may be configured on the first carrier 1010 included in the plurality of carriers, and a second DTX count may be configured on the second carrier 1020. And, for example, the threshold to detect the SL RLF may be configured on the plurality of carriers. For example, the threshold may be configured with an integer greater than or equal to 1. Meanwhile, in FIG. 10, it is assumed that the threshold is configured with "3" for convenience of explanation. That is, for example, as described later, when the first DTX count reaches "3", the SL RLF may be detected. Meanwhile, the UE may select at least one carrier for performing the HARQ-based SL RLF detection operation among the plurality of carriers. For example, the UE may measure the channel busy ratio (CBR) 1001 for the plurality of carriers to select the at least one carrier related to the HARQ-based SL RLF detection operation. In this case, for example, the CBR measurement 1001 may be performed based on the operation of FIG. 9 described above. For example, the CBR measurement value related to the first carrier 1010 among the plurality of carriers may be lower than the threshold, and the CBR measurement value related to the second carrier 1020 among the plurality of carriers may be higher than the threshold. In this case, for example, the UE may determine/consider the first carrier 1010 as a candidate carrier for carrier selection. And, for example, the UE may select the first carrier 1010 determined/considered as the candidate carrier for the carrier selection as a carrier for performing the HARQ-based SL RLF detection operation. Meanwhile, the UE may perform the HARQ-based SL RLF detection 1002 by performing the transmission based on the selected first carrier 1010. For example, the first DTX count configured on the first carrier 1010 may be initialized to "0" before the UE perform the transmission to the counterpart UE. For example, if the UE transmits the physical sidelink shared channel (PSSCH) to the counterpart UE based on the first carrier 1010, but does not receive the feedback for the PSSCH through the physical feedback channel (PSFCH) related to the slot for the PSSCH from the counterpart UE, the first DTX count configured on the first carrier 1010 may be increased by 1. In this case, for example, the first DTX count may be increased from "0" to "1". For example, if, after the first DTX count has been increased by 1, the UE transmits the PSSCH to the counterpart UE based on the first carrier 1010, but does not receive the feedback for the PSSCH through the PSFCH related to the slot for the PSSCH from the counterpart UE, the first DTX count configured on the first carrier 1010 may be increased by 1 again. In this case, for example, since the first DTX count is cumulatively incremented, it may be increased from "1" to "2". Meanwhile, when the first carrier 1010-based PSSCH transmission and feedback reception failure operation described above is repeated and the first DTX count configured on the first carrier 1010 reaches the threshold value "3", the UE may declare RLF for the PC5 RRC connection associated with the plurality of carriers including the first carrier 1010 and the second carrier 1020. That is, before performing the HARQ-based SL RLF detection operation described above, by selecting a carrier with CBR measurement lower than threshold and performing the HARQ-based SL RLF detection operation based on the selected carrier, the reliability of the HARQ-based SL RLF detection operation may be improved.

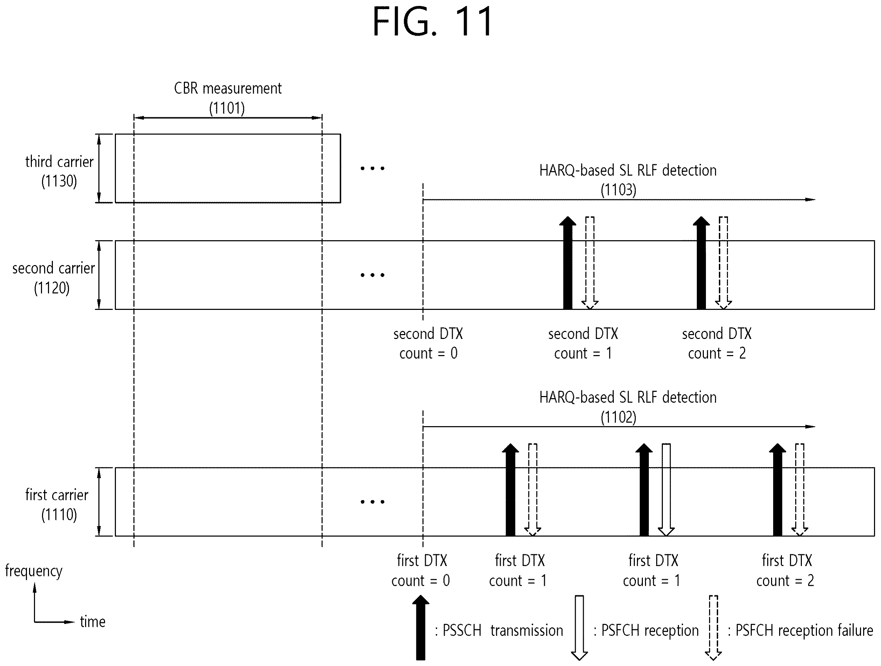

FIG. 11 shows a carrier selection method for HARQ-based SL RLF detection, based on an embodiment of the present disclosure. The embodiment of FIG. 11 may be combined with various embodiments of the present disclosure.

Referring to FIG. 11, the UE performing SL-based communication may establish the PC5 RRC connection with the counterpart UE. And, for example, the PC5 RRC connection may be associated with the plurality of carriers. For example, the plurality of carries may include a first carrier 1110, a second carrier 1120 and a third carrier 1130. For example, the parameters to control the operation related to the SL RLF may be configured on the plurality of carriers. For example, the discontinuous transmission (DTX) count may be configured for each carrier included in the plurality of carriers. That is, for example, a first DTX count may be configured on the first carrier 1110 included in the plurality of carriers, and a second DTX count may be configured on the second carrier 1120, and a third DTX count may be configured on the third carrier 1130. And, for example, the threshold to detect the SL RLF may be configured on the plurality of carriers. For example, the threshold may be configured with an integer greater than or equal to 1. Meanwhile, in FIG. 11, it is assumed that the threshold is configured with "2" for convenience of explanation. That is, for example, as described later, when the first DTX count or the second DTX count reaches "2", the SL RLF may be detected. Meanwhile, the UE may select at least one carrier for performing the HARQ-based SL RLF detection operation among the plurality of carriers. For example, the UE may measure the channel busy ratio (CBR) 1101 for the plurality of carriers to select the at least one carrier related to the HARQ-based SL RLF detection operation. In this case, for example, the CBR measurement 1101 may be performed based on the operation of FIG. 9 described above. For example, the CBR measurement value related to the first carrier 1110 among the plurality of carriers and the CBR measurement value related to the second carrier 1120 among the plurality of carriers may be lower than the threshold, and the CBR measurement value related to the third carrier 1130 among the plurality of carriers may be higher than the threshold. In this case, for example, the UE may determine/consider the first carrier 1110 and the second carrier 1120 as candidate carriers for carrier selection. And, for example, the UE may select the first carrier 1110 and the second carrier 1120 determined/considered as the candidate carriers for the carrier selection as carrier(s) for performing the HARQ-based SL RLF detection operation. Meanwhile, if the first carrier 1110 and the second carrier 1120 are selected as carrier(s) for performing the HARQ-based SL RLF detection operation, the UE may perform the HARQ-based SL RLF detection 1102 by performing the transmission based on the selected first carrier 1110, and may perform the HARQ-based SL RLF detection 1103 by performing the transmission based on the selected second carrier 1120. And, for example, the first DTX count configured on the first carrier 1110 may be initialized to "0" and the second DTX count configured on the second carrier 1120 may be initialized to "0" before the UE performs the transmission to the counterpart UE. For example, if the UE transmits the PSSCH to the counterpart UE based on the first carrier 1110, but does not receive the feedback for the PSSCH through the PSFCH related to the slot for the PSSCH from the counterpart UE, the first DTX count configured on the first carrier 1110 may be increased by 1. In this case, for example, the first DTX count may be increased from "0" to "1". And, for example, if the UE transmits the PSSCH to the counterpart UE based on the second carrier 1120, but does not receive the feedback for the PSSCH through the PSFCH related to the slot for the PSSCH from the counterpart UE, the second DTX count configured on the second carrier 1120 may be increased by 1. In this case, for example, the second DTX count may be increased from "0" to "1". Meanwhile, when the first carrier 1110 and the second carrier 1120-based PSSCH transmission and feedback reception failure operation described above are repeated, and the first DTX count configured on the first carrier 1110 and the second DTX count configured on the second carrier 1120 reach the threshold value "2", the UE may declare RLF for the PC5 RRC connection associated with the plurality of carriers including the first carrier 1110, the second carrier 1120 and the third carrier 1130. That is, before performing the HARQ-based SL RLF detection operation described above, by selecting a carrier with CBR measurement lower than threshold and performing the HARQ-based SL RLF detection operation based on the selected carrier, the reliability of the HARQ-based SL RLF detection operation may be improved.

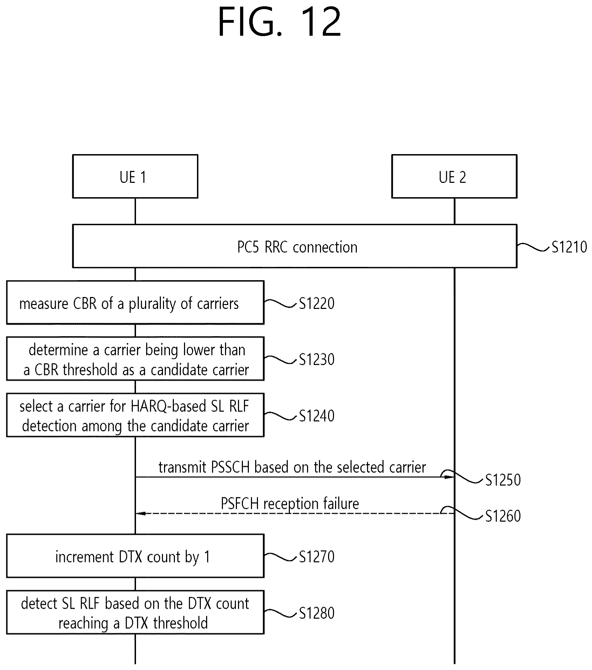

FIG. 12 shows a carrier selection method for HARQ-based SL RLF detection, based on an embodiment of the present disclosure. The embodiment of FIG. 12 may be combined with various embodiments of the present disclosure.

Referring to FIG. 12, In step S1210, the UE 1 may establish the PC5 RRC connection with UE 2 by transmitting a PC5-S message or a PC5 RRC message to the UE 2. In step S1220, the UE 1 may obtain information related to the plurality of carriers associated with the PC5 RRC connection, and may measure the CBR for each carrier included in the plurality of carriers. In step S1230, UE 1 may determine at least one carrier with CBR measurement value lower than the CBR threshold among the plurality of carriers based on the CBR measurement value measured for each carrier included in the plurality of carriers. For example, the at least one carrier with the CBR measurement value lower than the CBR threshold may be considered as a carrier for the carrier selection. In step S1240, the UE 1 may select at least one carrier for performing the HARQ-based SL RLF detection operation among the candidate carrier. In step S1250, the UE 1 may transmit PSSCH to the UE 2 based on the at least one carrier selected in step S1240 described above. In step S1260, the UE 1 cannot receive the feedback (e.g., HARQ ACK or HARQ NACK, etc.) on the PSFCH resource associated with the PSSCH transmitted in step S1250 described above. In step S1270, the UE 1 may increase the DTX count configured on the at least on carrier selected in step S1240 described above by 1 based on not receiving the PSFCH in step S1260 described above. For example, the UE 1 may increase the DTX count by 1 and then may transmit the PSSCH to UE 2 as in step S1250 described above, and if the UE 1 does not receive the PSFCH related to the transmitted PSSCH as in step S1260 described above, the UE 1 may increase the DTX count by 1 again as in step S1270 described above. In step S1280, the UE 1 may detect the SL RLF based on that the DTX count reaches the DTX threshold.

Meanwhile, in the present disclosure, carrier (re-)selection and resource (re-)selection and unicast communication operation of multi-carrier support UE are proposed as follows.

For example, when reselection for some (re-)transmission resources of the SL grant is triggered through the pre-configured operation/message (e.g., pre-emption and/or re-evaluation and/or UL/SL prioritization-based SL (re-)transmission skipping and/or inter-UE coordination (IUC) message reception), the SL carrier (re-)selection procedure may be configured not to be triggered (e.g., when this rule is applied, it may be interpreted that the SL carrier (re-)selection procedure is triggered only when (re-)selection for all SL grant-related resources is triggered.).

For example, when the sidelink MAC reset (and/or the SL resource pool (or the SL BWP) reconfiguration and/or the SL carrier candidate set reconfiguration able to configure the SL carrier aggregation (CA) (or the carrier set reconfiguration selected as SL CA) and/or synchronization (SYNC) carrier reconfiguration and/or SYNC priority reconfiguration) occurs, the SL carrier (re-)selection (and/or resource (re-)selection (on the relevant SL carrier)) may be triggered.

For example, the CBR threshold related to the SL carrier (re-)selection (and/or previously selected SL carrier maintenance) checking may be configured differently per service type (and/or priority) and/or per QoS profile (e.g., latency, reliability, etc.) and/or per logical channel (LCH) (or SL radio bearer, or SL radio bearer variety/type (e.g., SL data radio bearer (DRB) and SL signaling radio bearer (SRB))) and/or per SL carrier and/or per SL carrier type (e.g., SL radio link monitoring (RLM) carrier, SYNC carrier) and/or per SL resource pool (and/or SL BWP and/or SL carrier (and/or BWP and/or resource pool) configured with (or not configured with) PSFCH resource).

For example, depending on the number of SL CA SL carrier (and/or SL cast type (e.g., unicast, groupcast, broadcast) and/or SL HARQ feedback option (e.g., NACK only or ACK/NACK) and/or sidelink carrier index), etc., the maximum value of DTX (e.g., event for which feedback was not received for the PSCCH/PSSCH transmission) count related to the SL RLF declaration may be configured differently.

For example, when the V2X layer transfer the packet to the AS layer, it may be configured to provide SL carrier information on which the packet should be transmitted (e.g., for the packet that UEs must receive (together) in Rel-16/17, one SL carrier index information they are monitoring) together.

For example, when (re-)selecting a sidelink carrier used for SL grant generation related to HARQ feedback enabled data transmission, only SL carrier(s) including resource pool (more than a pre-configured number (e.g., 1)) configured with PSFCH resource is selected limitedly, and/or SL carrier(s) including resource pool more than a pre-configured (minimum) number (e.g., 1) configured with PSFCH resource, but not including resource pool configured with PSFCH resource, may also be selected. In this case, for example, in the above rule, "resource pool" may be interpreted limitedly as "normal pool" (or "normal pool" and "exceptional pool").

For example, when the SL CA operates, the UE may expect that an exceptional pool (more than a pre-configured (minimum) number) with PSFCH resource is configured for each SL carrier (or on the carrier(s) related to the SL CA).

For example, in the case of a limited transmission capability UE, when performing resource selection for SL carrier(s) related to the SL CA, the (time) retransmission resource related to SL grant cleared after receiving ACK from reception UE (related to the corresponding TB transmission) on the specific SL carrier may be configured not to be considered in checking whether the UE own TX capability has been reached when selecting resource on other SL carriers. In this case, for example, the SL grant including retransmission resource cleared based on ACK reception that is not considered in whether the TX capability has been reached in the corresponding rule may be limited as SL grant related to a single MAC PDU (e.g., aperiodic resource reservation) (and/or SL grant related to multiple MAC PDU (e.g., periodic resource reservation)).

In the present disclosure, the following operations may be configured to be performed between UEs that perform SL CA-based SL unicast operation.

For example, it may be configured to mutually exchange the capability information (through the pre-configured signaling (e.g., PC5 RRC)) related to the number of PSFCH (e.g., based on per carrier or per band combination) that can be simultaneously transmitted (and/or received).

For example, when the TX UE omits PSFCH reception operation due to performing PSFCH transmission operation, it may be configured not to perform DTX counting (corresponding to its own PSSCH transmission). In this case, for example, whether to perform DTX counting may be configured differently depending on the (relevant) service type (and/or priority and/or QoS profile (e.g., latency or reliability), etc.) and/or congestion level (on the SL carrier) (e.g., CBR, RSSI, RSRQ or SINR).

For example, on the plurality of SL carriers related to SL CA, when the TX UE performs PSSCH transmissions (including (some or all) HARQ feedback enabled data) and receives the corresponding PSFCH transmission above the pre-configured minimum threshold number/ratio (e.g., 1), it may be configured not to perform DTX counting for the corresponding PSSCH transmissions. In this case, for example, the relevant threshold may be configured differently depending on the (relevant) service type (and/or priority and/or QoS profile (e.g., latency or reliability), etc.) and/or congestion level (on the SL carrier) (e.g., CBR, RSSI, RSRQ or SINR). In addition, for example, the PSSCH transmissions (including (some or all) HARQ feedback enabled data) to which the above rule apply may be limited to having a PSFCH occasion at the same point in time (and/or in the above rule, the PSFCH reception time point may be limited (on the time domain) to the PSFCH occasion at the same point in time).

For example, under the SL CA operation situation, when performing PSFCH TX/RX prioritization, if the number of PSFCH transmissions is (above the number of pre-configured threshold) greater than the number of PSFCH receptions (or if the number of PSFCH transmissions is greater than or equal to a pre-configured threshold, or if the number of PSFCH receptions is below a pre-configured threshold), it may be configured to perform PSFCH transmission operation. In this case, for example, the corresponding rule may be applied limitedly only when the PSFCH transmission priority (and/or highest (or lowest) priority of the plurality of PSFCH transmissions) and the PSFCH reception priority (and/or highest (or lowest) priority of the plurality of PSFCH receptions) are same.

For example, when the RX UE omits the PSFCH transmission due to applying the PSFCH prioritization rule, it may be configured to transmit the relevant information to the TX UE through the pre-configured signaling (e.g., MAC CE). In this case, for example, the corresponding information may be configured to the number of PSFCHs for which transmission (for each carrier or plurality of SL carriers) is omitted (and/or relevant (L2) destination ID (and/or (L2) source ID) and/or (time and/or frequency) resource location related to PSFCH with omitted transmission), etc.

For example, through the negotiation (e.g., PC5 RRC or MAC CE) between UEs (and/or form the network), (one or plurality of) SL carrier on which SL DTX counting is performed (and/or used for SL RLM) may be selected, and such carriers may be limited to those that satisfy the following condition. In this case, for example, when an SL carrier for this purpose is (re-)configured, the SL DTX counting value on the existing SL carrier may be configured to be initialized (and/or configured to use/maintain the SL DTX counting of the existing SL carrier). In addition, for example, the SL carrier for the above purpose may be configured differently per type of service (e.g., (L2) destination (and/or priority and/or QoS profile (e.g., latency or reliability))) and/or per congestion level.

For example, the SL carrier including (more than the pre-configured (minimum) number) resource pool configured with PSFCH resource may be selected as a carrier on which the SL DTX counting described above is performed.

Or, for example, the SL carrier with lowest (or highest) (or relatively low (or high)) index among the SL carrier used for sidelink unicast may be selected as a carrier on which the SL DTX counting described above is performed.

Or, for example, the carrier allowed to transmit highest priority (or above a pre-configured threshold level) packet (related to the service) among the plurality of services supported based on sidelink unicast may be selected as a carrier on which the SL DTX counting described above is performed.

Or, for example, the carrier whose congestion level (e.g., CBR, RSSI, RSRQ or SINR) (and/or SL quality (e.g., CSI)) is higher (or lower) than the pre-configured threshold level among the SL carrier used for sidelink unicast may be selected as a carrier on which the SL DTX counting described above is performed.

Or, for example, SYNC reference carrier (on which SL-SSB transmission is performed) may be selected as a carrier on which the SL DTX counting described above is performed.

For example, when (re-)selecting a sidelink carrier used for SL grant generation related to HARQ feedback enabled data transmission, only SL carrier(s) including resource pool (more than a pre-configured number (e.g., 1)) configured with PSFCH resource is selected limitedly, and/or SL carrier(s) including resource pool more than a pre-configured (minimum) number (e.g., 1) configured with PSFCH resource, but not including resource pool configured with PSFCH resource, may also be selected. In this case, for example, in the above rule, "resource pool" may be interpreted limitedly as "normal pool" (or "normal pool" and "exceptional pool").

For example, when the SL CA operates, the UE may expect that an exceptional pool (more than a pre-configured (minimum) number) with PSFCH resource is configured for each SL carrier (or on the carriers related to the SL CA).

For example, in the case of a limited transmission capability UE, when performing resource selection for SL carrier(s) related to the SL CA, the (time) retransmission resource related to SL grant cleared after receiving ACK from reception UE (related to the corresponding TB transmission) on the specific SL carrier may be configured not to be considered in checking whether the UE own TX capability has been reached when selecting resource on other SL carriers. In this case, for example, the SL grant including retransmission resource cleared based on ACK reception that is not considered in whether the TX capability has been reached in the corresponding rule may be limited as SL grant related to a single MAC PDU (e.g., aperiodic resource reservation) (and/or SL grant related to multiple MAC PDU (e.g., periodic resource reservation)).

In the present disclosure, the following operations may be configured to be performed between UEs that perform SL CA-based SL unicast operation.

For example, it may be configured to mutually exchange the capability information (and/or information on the type of SL mode in which the UE own operate (e.g., mode 1 or mode 2) and/or connection status with base station/network (e.g., RRC_CONNECTED or IDLE or INACTIVE)) (through the pre-configured signaling (e.g., PC5 RRC)) related to the number of PSFCH (e.g., based on per carrier or per band combination) that can be simultaneously transmitted (and/or received).

For example, when the TX UE omits PSFCH reception operation due to performing PSFCH transmission operation, it may be configured not to perform DTX counting (corresponding to its own PSSCH transmission). In this case, for example, whether to perform DTX counting may be configured differently depending on the (relevant) service type (and/or priority and/or QoS profile (e.g., latency or reliability), etc.) and/or congestion level (on the SL carrier) (e.g., CBR, RSSI, RSRQ or SINR).

For example, on the plurality of SL carriers related to SL CA, when the TX UE performs PSSCH transmissions (including (some or all) HARQ feedback enabled data) and receives the corresponding PSFCH transmission above the pre-configured minimum threshold number/ratio (e.g., 1), it may be configured not to perform DTX counting for the corresponding PSSCH transmissions (and/or configured to initialize the DTX counting value (e.g., 0 or pre-configured value)). In this case, for example, the relevant threshold may be configured differently depending on the (relevant) service type (and/or priority and/or QoS profile (e.g., latency or reliability), etc.) and/or congestion level (on the SL carrier) (e.g., CBR, RSSI, RSRQ or SINR). In addition, for example, the PSSCH transmissions (including (some or all) HARQ feedback enabled data) to which the above rule apply may be limited to having a PSFCH occasion at the same point in time (and/or in the above rule, the PSFCH reception time point may be limited (on the time domain) to the PSFCH occasion at the same point in time).

For example, under the SL CA operation situation, when performing PSFCH TX/RX prioritization, if the number of PSFCH transmissions is (above the number of pre-configured threshold) greater than the number of PSFCH receptions (or if the number of PSFCH transmissions is greater than or equal to a pre-configured threshold, or if the number of PSFCH receptions is below a pre-configured threshold), it may be configured to perform PSFCH transmission operation. In this case, for example, the corresponding rule may be applied limitedly only when the PSFCH transmission priority (and/or highest (or lowest) priority of the plurality of PSFCH transmissions) and the PSFCH reception priority (and/or highest (or lowest) priority of the plurality of PSFCH receptions) are same.

For example, when the RX UE omits the PSFCH transmission due to applying the PSFCH prioritization rule, it may be configured to transmit the relevant information to the TX UE through the pre-configured signaling (e.g., MAC CE). In this case, for example, the corresponding information may be configured to the number of PSFCHs for which transmission (for each SL carrier or plurality of SL carriers) is omitted (and/or relevant (L2) destination ID (and/or (L2) source ID) and/or (time and/or frequency) resource location related to PSFCH with omitted transmission), etc.

For example, through the negotiation (e.g., PC5 RRC or MAC CE) between UEs (and/or form the network), (one or plurality of) SL carrier on which SL DTX counting is performed (and/or used for SL RLM) may be selected, and such carriers may be limited to those that satisfy the following condition. In this case, for example, when an SL carrier for this purpose is (re-)configured, the SL DTX counting value on the existing SL carrier may be configured to be initialized (e.g., 0 or pre-configured value) (and/or configured to use/maintain the SL DTX counting of the existing SL carrier). In addition, for example, the SL carrier for the above purpose may be configured differently per type of service (e.g., (L2) destination (and/or priority and/or QoS profile (e.g., latency or reliability))) and/or per congestion level.

For example, the SL carrier including (more than the pre-configured (minimum) number) resource pool configured with PSFCH resource may be selected as a carrier on which the SL DTX counting described above is performed.

Or, for example, the SL carrier with lowest (or highest) (or relatively low (or high)) index among the SL carrier used for sidelink unicast may be selected as a carrier on which the SL DTX counting described above is performed.

Or, for example, the carrier allowed to transmit highest priority (or above a pre-configured threshold level) packet (related to the service) among the plurality of services supported based on sidelink unicast may be selected as a carrier on which the SL DTX counting described above is performed.

Or, for example, the carrier whose congestion level (e.g., CBR, RSSI, RSRQ or SINR) (and/or SL quality (e.g., CSI)) is higher (or lower) than the pre-configured threshold level among the SL carrier used for sidelink unicast may be selected as a carrier on which the SL DTX counting described above is performed.

Or, for example, SYNC reference carrier (on which SL-SSB transmission is performed) may be selected as a carrier on which the SL DTX counting described above is performed.

For example, the SL carrier which is allowed to transmit (and/or receive) the pre-configured message may be (pre-)configured. In this case, for example, the corresponding SL carrier may be configured differently depending on the service type (and/or priority and/or QoS profile (e.g., latency or reliability, etc.) and/or congestion level (on the SL carrier) (e.g., SBR, RSSI, RSRQ or SINR) and/or associated Release (e.g., Rel-16/17, Rel-18) and/or SL mode (e.g., mode 1 or mode 2) (e.g., (at least) when transmitting a packet that a legacy Rel-16/17 UE (or Rel-18 mode 1 UE, or Rel-18 UE without SL CA capability) must receive, (one) SL carrier that (must) be included/selected may be (pre-)configured (per service variety/type or (L2) destination ID)). In addition, for example, the message may be configured to PC5-S signaling (to form SL unicast session) (e.g., DCR, DCA, security setup message) (and/or PC5 RRC message and/or MAC CE message) and/or message related to the pre-configured radio bearer (type/variety) (e.g., signaling radio bearer (SRB)).

The wording of SL multi-carrier exemplified in the present disclosure may be extended and interpreted as SL carrier aggregation (CA). In addition, the wording of SL CA exemplified in the present disclosure may be expanded and interpreted as SL multi-carrier.

The SL resource pool (or SL HARQ entity) exemplified in the present disclosure may be interpreted as an SL resource pool (or SL HARQ entity) for a specific SL carrier.

The CBR threshold value related to the SL carrier/SL BWP/SL HARQ entity exemplified in the present disclosure may be configured per priority or per QoS profile (e.g., packet delay budget (PDB) or reliability) or per SL radio bearer or per logical channel.

The wording of the SL carrier exemplified in the present disclosure may be expanded and interpreted as sidelink BWP or sidelink HARQ entity.

The unicast service exemplified in the present disclosure may be interpreted as a pair of source layer-2 ID and destination layer-2 ID.

The groupcast service exemplified in the present disclosure may be interpreted as a groupcast destination layer-2 ID.

The broadcast service exemplified in the present disclosure may be interpreted as a broadcast destination layer-2 ID.

The "carrier" specified in the present disclosure may be applied as being replaced with "band" or "resource block set of a specific carrier" or "resource pool set of a specific carrier" or "channel".

For example, whether or not the (some) proposed method/rule of the present disclosure is applied and/or related parameter(s) (e.g., threshold value(s)) may be configured (differently or independently) for each SL-Channel Access Priority Class (CAPC). For example, whether or not the (some) proposed method/rule of the present disclosure is applied and/or related parameter(s) (e.g., threshold value(s)) may be configured (differently or independently) for each SL-LBT type (e.g., Type 1 LBT, Type 2A LBT, Type 2B LBT, Type 2C LBT). For example, whether or not the (some) proposed method/rule of the present disclosure is applied and/or related parameter(s) (e.g., threshold value(s)) may be configured specifically (or differently or independently) depending on whether or not Frame Based LBT is applied. For example, whether or not the (some) proposed method/rule of the present disclosure is applied and/or related parameter(s) (e.g., threshold value(s)) may be configured specifically (or differently or independently) depending on whether or not Load Based LBT is applied.

For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s) (e.g., threshold value(s)) may be configured (differently or independently) for each traffic type (e.g., periodic generation or aperiodic generation). For example, whether or not the (some) proposed method/rule of the present disclosure is applied and/or related parameter(s) (e.g., threshold value(s)) may be configured (differently or independently) for each SL transmission resource allocation mode (e.g., mode 1 or mode 2). For example, whether or not the (some) proposed method/rule of the present disclosure is applied and/or related parameter(s) (e.g., threshold value(s)) may be configured (differently or independently) for each Tx profile (e.g., a Tx profile indicating that a service supports sidelink DRX operation or a Tx profile indicating that a service does not need to support sidelink DRX operation).

For example, whether or not the proposed rule of the present disclosure is applied and/or related parameter configuration value(s) may be configured (differently or independently) depending on the activation/deactivation of the Uu Bandwidth part. For example, whether or not the proposed rule of the present disclosure is applied and/or related parameter configuration value(s) may be configured (differently or independently) depending on whether the Sidelink Bandwidth part is activated or deactivated. For example, whether or not the proposed rule of the present disclosure is applied and/or related parameter configuration value(s) may be configured (differently or independently) for a sidelink logical channel/logical channel group (or Uu logical channel or Uu logical channel group). For example, whether or not the proposed rule of the present disclosure is applied and/or related parameter configuration value(s) may be configured (differently or independently) of the initial transmission resource selection. For example, whether or not the proposed rule of the present disclosure is applied and/or related parameter configuration value(s) may be configured (differently or independently) of the retransmission resource selection. For example, whether or not the proposed rule of the present disclosure is applied and/or related parameter configuration value(s) may be configured (differently or independently) depending on whether the PUCCH configuration is supported (e.g., in case that a PUCCH resource is configured or in case that a PUCCH resource is not configured). For example, whether or not the proposed rule of the present disclosure is applied and/or related parameter configuration value(s) may be configured (differently or independently) for each resource pool (e.g., a resource pool with a PSFCH or a resource pool without a PSFCH). For example, whether or not the proposed rule of the present disclosure is applied and/or related parameter configuration value(s) may be configured (differently or independently) for each service/packet type. For example, whether or not the proposed rule of the present disclosure is applied and/or related parameter configuration value(s) may be configured (differently or independently) for each service/packet priority. For example, whether or not the proposed rule of the present disclosure is applied and/or related parameter configuration value(s) may be configured (differently or independently) for each QoS requirement (e.g., URLLC/EMBB traffic, reliability, latency). For example, whether or not the proposed rule of the present disclosure is applied and/or related parameter configuration value(s) may be configured (differently or independently) for each PQI. For example, whether or not the proposed rule of the present disclosure is applied and/or related parameter configuration value(s) may be configured (differently or independently) for each PFI. For example, whether or not the proposed rule of the present disclosure is applied and/or related parameter configuration value(s) may be configured (differently or independently) for each cast type (e.g., unicast, groupcast, broadcast). For example, whether or not the proposed rule of the present disclosure is applied and/or related parameter configuration value(s) may be configured (differently or independently) for each (resource pool) congestion level (e.g., CBR). For example, whether or not the proposed rule of the present disclosure is applied and/or related parameter configuration value(s) may be configured (differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or depending on whether or not pre-emption-based resource reselection is performed. For example, whether or not the proposed rule of the present disclosure is applied and/or related parameter configuration value(s) may be configured specifically (or differently or independently) for re-evaluation or depending on whether or not re-evaluation-based resource reselection is performed. For example, whether or not the proposed rule of the present disclosure is applied and/or related parameter configuration value(s) may be configured (differently or independently) for each (L2 or L1) (source and/or destination) identifier. For example, whether or not the proposed rule of the present disclosure is applied and/or related parameter configuration value(s) may be configured (differently or independently) for each (L2 or L1) (a combination of source ID and destination ID) identifier. For example, whether or not the proposed rule of the present disclosure is applied and/or related parameter configuration value(s) may be configured (differently or independently) for each (L2 or L1) (a combination of a pair of source ID and destination ID and a cast type) identifier. For example, whether or not the proposed rule of the present disclosure is applied and/or related parameter configuration value(s) may be configured (differently or independently) for each direction of a pair of source layer ID and destination layer ID. For example, whether or not the proposed rule of the present disclosure is applied and/or related parameter configuration value(s) may be configured (differently or independently) for each PC5 RRC connection/link. For example, whether or not the proposed rule of the present disclosure is applied and/or related parameter configuration value(s) may be configured specifically (or differently or independently) depending on whether or not SL DRX is performed. For example, whether or not the proposed rule of the present disclosure is applied and/or related parameter configuration value(s) may be configured specifically (or differently or independently) depending on whether or not SL DRX is supported. For example, whether or not the proposed rule of the present disclosure is applied and/or related parameter configuration value(s) may be configured (differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation. For example, whether or not the proposed rule of the present disclosure is applied and/or related parameter configuration value(s) may be configured specifically (or differently or independently) for each Tx profile (e.g., a Tx profile indicating that a service supports sidelink DRX operation or a Tx profile indicating that a service does not need to support sidelink DRX operation).

The proposal and whether or not the proposal rule of the present disclosure is applied (and/or related parameter configuration value(s)) may also be applied to a mmWave SL operation.

According to various embodiments of the present disclosure, in sidelink (SL) carrier aggregation (CA) (or in multi-carrier-based operation), when the transmitting UE performs a HARQ-based SL RLF detection operation for a PC5 RRC connection, DTX may be counted based on a carrier with good congestion level and SL RLF may be detected based on this. Specifically, for example, since the transmitting UE may determine a carrier for which CBR is guaranteed (e.g., for which CBR measurement value is lower than the threshold) as a candidate carrier among the plurality of carriers associated with the PC5 RRC connection and may select a carrier performing the HARQ-based SL RLF detection among the candidate carrier, the SL RLF with high reliability may be detected. Additionally, for example, since SL RLF detection and PC5 RRC connection release operation may be performed based on a carrier for which CBR is guaranteed, (re-)establishment of the PC5 RRC connection may not be repeated unnecessarily. In this case, for example, resource allocation for (re-)establishment of a PC5 RRC connection may be prevented from being performed inefficiently. Additionally, for example, the reliability of SL-based communication may be guaranteed.

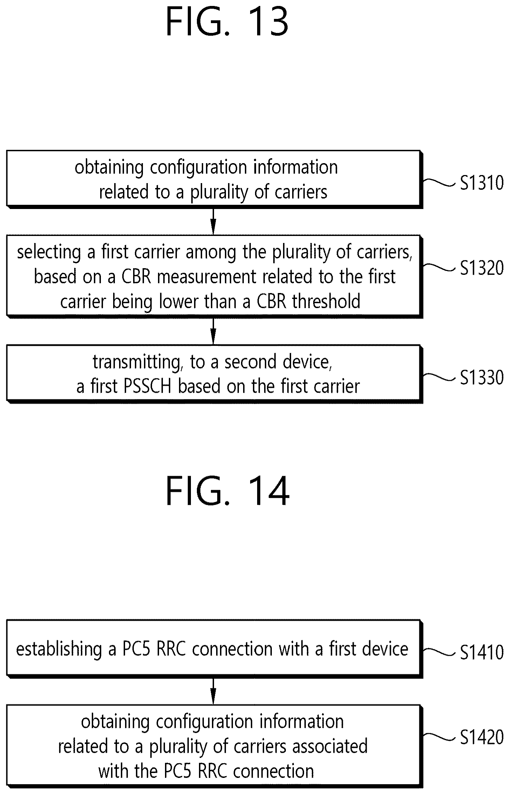

FIG. 13 shows a method for performing wireless communication by a first device, based on an embodiment of the present disclosure. The embodiment of FIG. 13 may be combined with various embodiments of the present disclosure.

Referring to FIG. 13, In step S1310, a first device may obtain configuration information related to a plurality of carriers. In step S1320, the first device may select a first carrier among the plurality of carriers, based on a channel busy ratio (CBR) measurement related to the first carrier being lower than a CBR threshold. In step S1330, the first device may transmit, to a second device, a first physical sidelink shared channel (PSSCH) based on the first carrier. For example, the first carrier may be determined as a carrier for detecting a hybrid automatic repeat request (HARQ)-based sidelink (SL) radio link failure (RLF).

For example, a resource pool including a resource configured a physical sidelink feedback channel (PSFCH) may be configured on the first carrier.

For example, at least one logical channel enabled with HARQ feedback may be configured on the first carrier.

For example, a discontinuous transmission (DTX) count may be configured per each carrier included in the plurality of carriers.

For example, a DTX count related to the first carrier may be incremented by 1 based on not receiving a PSFCH for the first PSSCH from the second device.

For example, the HARQ-based SL RLF may be detected based on a DTX count related to the first carrier reaching a DTX threshold.

Additionally, for example, the first device may select a second carrier among the plurality of carriers, based on a CBR measurement related to the second carrier being lower than the CBR threshold. And, for example, the first device may transmit, to the second device, a second PSSCH based on the second carrier. For example, the second carrier may be determined as the carrier for detecting the HARQ-based SL RLF. And, for example, the HARQ-based SL RLF may be detected based on (i) a DTX count related to the first carrier reaching a DTX threshold, and (ii) a DTX count related to the second carrier reaching the DTX threshold.

For example, a first HARQ entity may be mapped to the first carrier, based on a HARQ entity being mapped to each carrier included in the plurality of carriers.

For example, information related to the HARQ-based SL RLF may be transferred from a lower layer of the first device to a higher layer of the first device, based on a detection of the HARQ-based SL RLF. For example, the information related to the HARQ-based SL RLF may include at least one of an index of the first carrier, a cause of the HARQ-based SL RLF, a source ID related to the first carrier or a destination ID related to the first carrier.

For example, at least one DTX count related to at least one carrier excluding the first carrier among the plurality of carriers may be not incremented based on not receiving a PSFCH for the first PSSCH from the second device.

For example, the CBR threshold may be configured based on at least one of a priority, a quality of service (QoS) profile, a radio bearer or a logical channel.

The proposed method may be applied to devices according to various embodiments of the present disclosure. First, a processor 102 of a first device 100 may control a transceiver 106 to obtain configuration information related to a plurality of carriers. And, the processor 102 of the first device 100 may select a first carrier among the plurality of carriers, based on a channel busy ratio (CBR) measurement related to the first carrier being lower than a CBR threshold. And, the processor 102 of the first device 100 may control the transceiver 106 to transmit, to a second device, a first physical sidelink shared channel (PSSCH) based on the first carrier. For example, the first carrier may be determined as a carrier for detecting a hybrid automatic repeat request (HARQ)-based sidelink (SL) radio link failure (RLF).

According to one embodiment of the present disclosure, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: obtaining configuration information related to a plurality of carriers; selecting a first carrier among the plurality of carriers, based on a channel busy ratio (CBR) measurement related to the first carrier being lower than a CBR threshold; and transmitting, to a second device, a first physical sidelink shared channel (PSSCH) based on the first carrier. For example, the first carrier may be determined as a carrier for detecting a hybrid automatic repeat request (HARQ)-based sidelink (SL) radio link failure (RLF).

According to one embodiment of the present disclosure, provided is a processing device configured to control a first device. The processing device may comprise: at least one processor; and at least one memory connected to the at least one processor and storing instructions. For example, the instructions, based on being executed by the at least one processor, cause the first device to perform operations comprising: obtaining configuration information related to a plurality of carriers; selecting a first carrier among the plurality of carriers, based on a channel busy ratio (CBR) measurement related to the first carrier being lower than a CBR threshold; and transmitting, to a second device, a first physical sidelink shared channel (PSSCH) based on the first carrier. For example, the first carrier may be determined as a carrier for detecting a hybrid automatic repeat request (HARQ)-based sidelink (SL) radio link failure (RLF).

According to one embodiment of the present disclosure, provided is a non-transitory computer-readable storage medium recording instructions. For example, the instructions, based on being executed, cause a first device to perform operations comprising: obtaining configuration information related to a plurality of carriers; selecting a first carrier among the plurality of carriers, based on a channel busy ratio (CBR) measurement related to the first carrier being lower than a CBR threshold; and transmitting, to a second device, a first physical sidelink shared channel (PSSCH) based on the first carrier. For example, the first carrier may be determined as a carrier for detecting a hybrid automatic repeat request (HARQ)-based sidelink (SL) radio link failure (RLF).

FIG. 14 shows a method for performing wireless communication by a second device, based on an embodiment of the present disclosure. The embodiment of FIG. 14 may be combined with various embodiments of the present disclosure.

Referring to FIG. 14, In step S1410, a second device may establish a PC5 radio resource control (RRC) connection with a first device. In step S1410, the second device may obtain configuration information related to a plurality of carriers related to the PC5 RRC connection. For example, a first carrier among the plurality of carriers may be a carrier for detecting a hybrid automatic repeat request (HARQ)-based sidelink (SL) radio link failure (RLF), based on a channel busy ratio (CBR) measurement related to the first carrier being lower than a CBR threshold.

The proposed method may be applied to devices according to various embodiments of the present disclosure. First, a processor 202 of a second device 200 may establish a PC5 radio resource control (RRC) connection with a first device. And, the processor 202 of the second device 200 may control a transceiver 206 to obtain configuration information related to a plurality of carriers related to the PC5 RRC connection. For example, a first carrier among the plurality of carriers may be a carrier for detecting a hybrid automatic repeat request (HARQ)-based sidelink (SL) radio link failure (RLF), based on a channel busy ratio (CBR) measurement related to the first carrier being lower than a CBR threshold.

According to one embodiment of the present disclosure, provided is a second device configured to perform wireless communication. The second device may comprise: at least one transceiver; at least one processor; and at least one memory connected to the at least one processor and storing instructions. For example, the instructions, based on being executed by the at least one processor, cause the second device to perform operations comprising: establishing a PC5 radio resource control (RRC) connection with a first device; and obtaining configuration information related to a plurality of carriers related to the PC5 RRC connection. For example, a first carrier among the plurality of carriers may be a carrier for detecting a hybrid automatic repeat request (HARQ)-based sidelink (SL) radio link failure (RLF), based on a channel busy ratio (CBR) measurement related to the first carrier being lower than a CBR threshold.

According to one embodiment of the present disclosure, provided is a processing device configured to control a second device. The processing device may comprise: at least one processor; and at least one memory connected to the at least one processor and storing instructions. For example, the instructions, based on being executed by the at least one processor, cause the second device to perform operations comprising: establishing a PC5 radio resource control (RRC) connection with a first device; and obtaining configuration information related to a plurality of carriers related to the PC5 RRC connection. For example, a first carrier among the plurality of carriers may be a carrier for detecting a hybrid automatic repeat request (HARQ)-based sidelink (SL) radio link failure (RLF), based on a channel busy ratio (CBR) measurement related to the first carrier being lower than a CBR threshold.

According to one embodiment of the present disclosure, provided is a non-transitory computer-readable storage medium recording instructions. For example, the instructions, based on being executed, cause a second device to perform operations comprising: establishing a PC5 radio resource control (RRC) connection with a first device; and obtaining configuration information related to a plurality of carriers related to the PC5 RRC connection. For example, a first carrier among the plurality of carriers may be a carrier for detecting a hybrid automatic repeat request (HARQ)-based sidelink (SL) radio link failure (RLF), based on a channel busy ratio (CBR) measurement related to the first carrier being lower than a CBR threshold.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

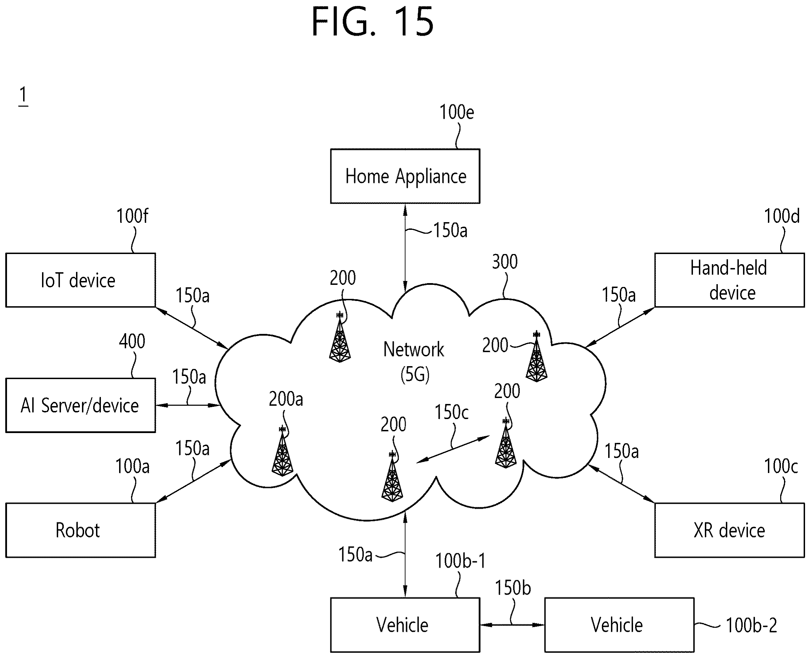

FIG. 15 shows a communication system 1, based on an embodiment of the present disclosure. The embodiment of FIG. 15 may be combined with various embodiments of the present disclosure.

Referring to FIG. 15, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

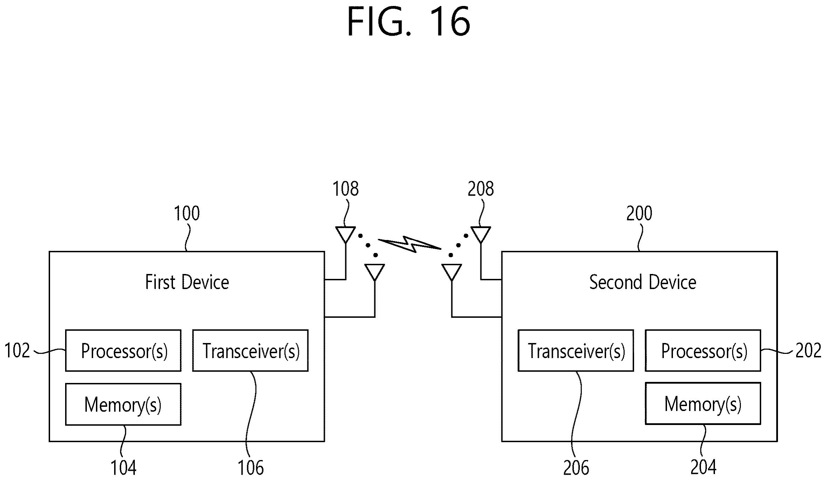

FIG. 16 shows wireless devices, based on an embodiment of the present disclosure. The embodiment of FIG. 16 may be combined with various embodiments of the present disclosure.

Referring to FIG. 16, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 15.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

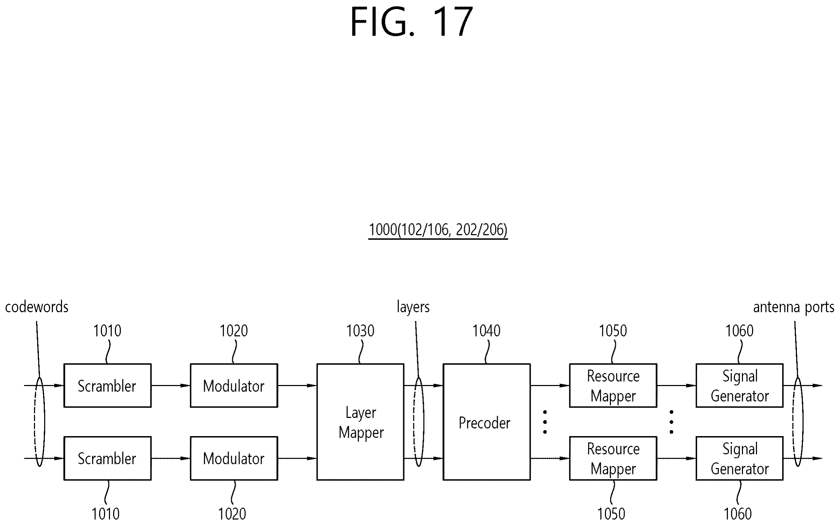

FIG. 17 shows a signal process circuit for a transmission signal, based on an embodiment of the present disclosure. The embodiment of FIG. 17 may be combined with various embodiments of the present disclosure.

Referring to FIG. 17, a signal processing circuit 1000 may include scramblers 1010, modulators 1020, a layer mapper 1030, a precoder 1040, resource mappers 1050, and signal generators 1060. An operation/function of FIG. 17 may be performed, without being limited to, the processors 102 and 202 and/or the transceivers 106 and 206 of FIG. 16. Hardware elements of FIG. 17 may be implemented by the processors 102 and 202 and/or the transceivers 106 and 206 of FIG. 16. For example, blocks 1010 to 1060 may be implemented by the processors 102 and 202 of FIG. 16. Alternatively, the blocks 1010 to 1050 may be implemented by the processors 102 and 202 of FIG. 16 and the block 1060 may be implemented by the transceivers 106 and 206 of FIG. 16.

Codewords may be converted into radio signals via the signal processing circuit 1000 of FIG. 17. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 17. For example, the wireless devices (e.g., 100 and 200 of FIG. 16) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

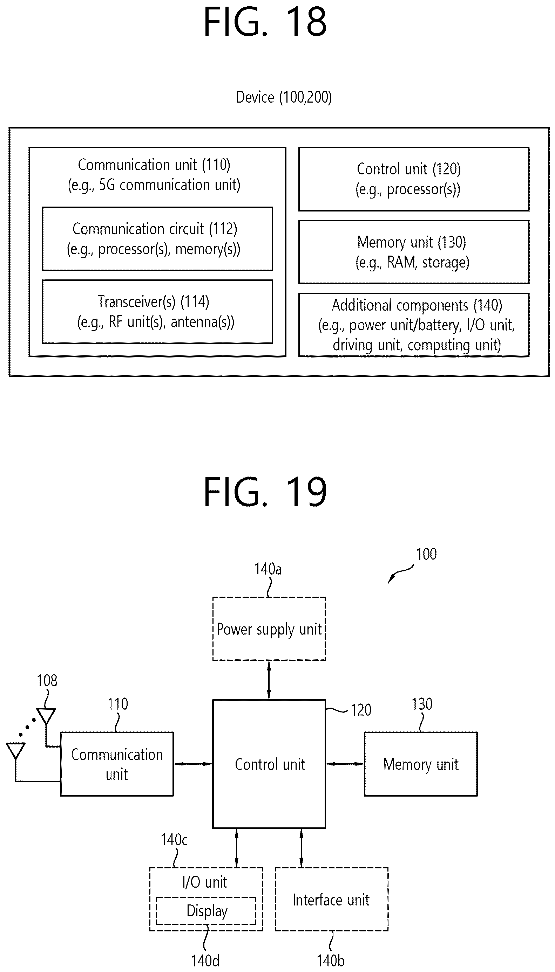

FIG. 18 shows another example of a wireless device, based on an embodiment of the present disclosure. The wireless device may be implemented in various forms according to a use-case/service (refer to FIG. 15). The embodiment of FIG. 18 may be combined with various embodiments of the present disclosure.

Referring to FIG. 18, wireless devices 100 and 200 may correspond to the wireless devices 100 and 200 of FIG. 16 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 16. For example, the transceiver(s) 114 may include the one or more transceivers 106 and 206 and/or the one or more antennas 108 and 208 of FIG. 16. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 15), the vehicles (100b-1 and 100b-2 of FIG. 15), the XR device (100c of FIG. 15), the hand-held device (100d of FIG. 15), the home appliance (100e of FIG. 15), the IoT device (100f of FIG. 15), a digital broadcast terminal, a hologram device, a public safety device, an MTC device, a medicine device, a fintech device (or a finance device), a security device, a climate/environment device, the AI server/device (400 of FIG. 15), the BSs (200 of FIG. 15), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 18 will be described in detail with reference to the drawings.

FIG. 19 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 19 may be combined with various embodiments of the present disclosure.

Referring to FIG. 19, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 18, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

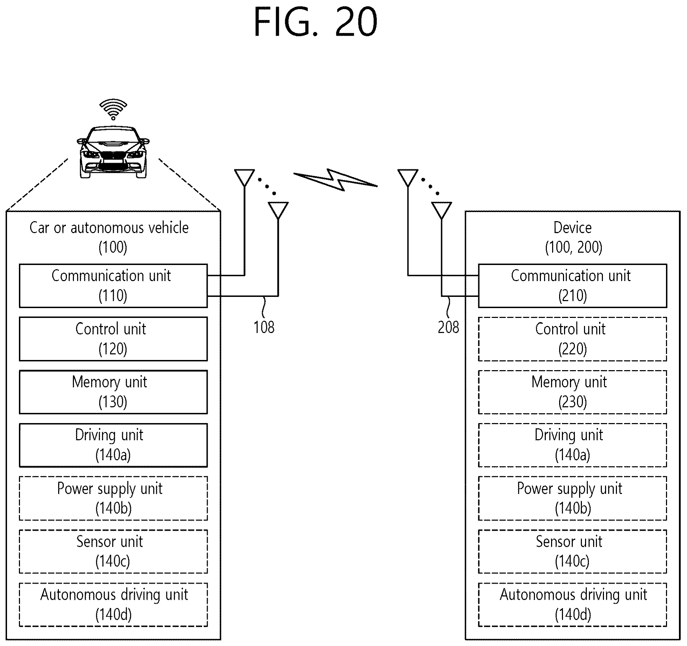

FIG. 20 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 20 may be combined with various embodiments of the present disclosure.

Referring to FIG. 20, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
obtaining configuration information related to a plurality of carriers;
selecting a first carrier among the plurality of carriers, based on a channel busy ratio (CBR) measurement related to the first carrier being lower than a CBR threshold; and
transmitting, to a second device, a first physical sidelink shared channel (PSSCH) based on the first carrier,
wherein the first carrier is determined as a carrier for detecting a hybrid automatic repeat request (HARQ)-based sidelink (SL) radio link failure (RLF).

2. The method of claim 1, wherein a resource pool including a resource configured a physical sidelink feedback channel (PSFCH) is configured on the first carrier.

3. The method of claim 1, wherein at least one logical channel enabled with HARQ feedback is configured on the first carrier.

4. The method of claim 1, wherein a discontinuous transmission (DTX) count is configured per each carrier included in the plurality of carriers.

5. The method of claim 1, wherein a DTX count related to the first carrier is incremented by 1 based on not receiving a PSFCH for the first PSSCH from the second device.

6. The method of claim 1, wherein the HARQ-based SL RLF is detected based on a DTX count related to the first carrier reaching a DTX threshold.

7. The method of claim 1, further comprising:
selecting a second carrier among the plurality of carriers, based on a CBR measurement related to the second carrier being lower than the CBR threshold; and
transmitting, to the second device, a second PSSCH based on the second carrier,
wherein the second carrier is determined as the carrier for detecting the HARQ-based SL RLF, and
wherein the HARQ-based SL RLF is detected based on (i) a DTX count related to the first carrier reaching a DTX threshold, and (ii) a DTX count related to the second carrier reaching the DTX threshold.

8. The method of claim 7, wherein a PC5 radio resource control (RRC) connection related to the first carrier and the second carrier is released based on the detection of the HARQ-based SL RLF.

9. The method of claim 1, wherein a first HARQ entity is mapped to the first carrier, based on a HARQ entity being mapped to each carrier included in the plurality of carriers.

10. The method of claim 1, wherein information related to the HARQ-based SL RLF is transferred from a lower layer of the first device to a higher layer of the first device, based on a detection of the HARQ-based SL RLF.

11. The method of claim 10, wherein the information related to the HARQ-based SL RLF includes at least one of an index of the first carrier, a cause of the HARQ-based SL RLF, a source ID related to the first carrier or a destination ID related to the first carrier.

12. The method of claim 1, wherein at least one DTX count related to at least one carrier excluding the first carrier among the plurality of carriers is not incremented based on not receiving a PSFCH for the first PSSCH from the second device.

13. The method of claim 1, wherein the CBR threshold is configured based on at least one of a priority, a quality of service (QoS) profile, a radio bearer or a logical channel.

14. A first device adapted to perform wireless communication, the first device comprising:
at least one transceiver;
at least one processor; and
at least one memory connected to the at least one processor and storing instructions that, based on being executed, cause the first device to perform operations comprising:
obtaining configuration information related to a plurality of carriers;
selecting a first carrier among the plurality of carriers, based on a channel busy ratio (CBR) measurement related to the first carrier being lower than a CBR threshold; and
transmitting, to a second device, a first physical sidelink shared channel (PSSCH) based on the first carrier,
wherein the first carrier is determined as a carrier for detecting a hybrid automatic repeat request (HARQ)-based sidelink (SL) radio link failure (RLF).

15. A processing device adapted to control a first device to perform wireless communication, the processing device comprising:
at least one processor; and
at least one memory connected to the at least one processor and storing instructions that, based on being executed, cause the at least one processor to perform operations comprising:
obtaining configuration information related to a plurality of carriers;
selecting a first carrier among the plurality of carriers, based on a channel busy ratio (CBR) measurement related to the first carrier being lower than a CBR threshold; and
transmitting, to a second device, a first physical sidelink shared channel (PSSCH) based on the first carrier,
wherein the first carrier is determined as a carrier for detecting a hybrid automatic repeat request (HARQ)-based sidelink (SL) radio link failure (RLF).

16. A non-transitory computer-readable storage medium recording instructions, the instruction, when executed, cause a first device to perform operations comprising:
obtaining configuration information related to a plurality of carriers;
selecting a first carrier among the plurality of carriers, based on a channel busy ratio (CBR) measurement related to the first carrier being lower than a CBR threshold; and
transmitting, to a second device, a first physical sidelink shared channel (PSSCH) based on the first carrier,
wherein the first carrier is determined as a carrier for detecting a hybrid automatic repeat request (HARQ)-based sidelink (SL) radio link failure (RLF).

17. A method for performing wireless communication by a second device, the method comprising:
establishing a PC5 radio resource control (RRC) connection with a first device; and
obtaining configuration information related to a plurality of carriers related to the PC5 RRC connection,
wherein a first carrier among the plurality of carriers is a carrier for detecting a hybrid automatic repeat request (HARQ)-based sidelink (SL) radio link failure (RLF), based on a channel busy ratio (CBR) measurement related to the first carrier being lower than a CBR threshold.

18. A second device adapted to perform wireless communication, the second device comprising:
at least one transceiver;
at least one processor; and
at least one memory connected to the at least one processor and storing instructions that, based on being executed, cause the second device to perform operations comprising:
establishing a PC5 radio resource control (RRC) connection with a first device; and
obtaining configuration information related to a plurality of carriers related to the PC5 RRC connection,
wherein a first carrier among the plurality of carriers is a carrier for detecting a hybrid automatic repeat request (HARQ)-based sidelink (SL) radio link failure (RLF), based on a channel busy ratio (CBR) measurement related to the first carrier being lower than a CBR threshold.

19. A processing device adapted to control a second device to perform wireless communication, the processing device comprising:
at least one processor; and
at least one memory connected to the at least one processor and storing instructions that, based on being executed, cause the at least one processor to perform operations comprising:
establishing a PC5 radio resource control (RRC) connection with a first device; and
obtaining configuration information related to a plurality of carriers related to the PC5 RRC connection,
wherein a first carrier among the plurality of carriers is a carrier for detecting a hybrid automatic repeat request (HARQ)-based sidelink (SL) radio link failure (RLF), based on a channel busy ratio (CBR) measurement related to the first carrier being lower than a CBR threshold.

20. A non-transitory computer-readable storage medium recording instructions, the instruction, when executed, cause a second device to perform operations comprising:
establishing a PC5 radio resource control (RRC) connection with a first device; and
obtaining configuration information related to a plurality of carriers related to the PC5 RRC connection,
wherein a first carrier among the plurality of carriers is a carrier for detecting a hybrid automatic repeat request (HARQ)-based sidelink (SL) radio link failure (RLF), based on a channel busy ratio (CBR) measurement related to the first carrier being lower than a CBR threshold.
